(19) Europäisches Patentamt
European Patent Office
Office européen des brevets

(11) EP 0 396 130 B1

(12) EUROPÄISCHE PATENTSCHRIFT

(45) Veröffentlichungstag und Bekanntmachung des Hinweises auf die Patenterteilung:
**18.09.1996 Patentblatt 1996/38**

(51) Int. Cl.[6]: **C07F 7/18**, C08G 77/42

(21) Anmeldenummer: **90108354.3**

(22) Anmeldetag: **03.05.1990**

(54) **Alkenyloxyfunktionelle Organosiliciumverbindungen, deren Herstellung und Verwendung**

Alkenyloxy-functional organosilicon compounds, their preparation and use

Composés organosiliciques à fonction alcénoyloxy, leur préparation et leur emploi

(84) Benannte Vertragsstaaten:
**AT BE CH DE ES FR GB IT LI NL SE**

(30) Priorität: **05.05.1989 DE 3914896**

(43) Veröffentlichungstag der Anmeldung:
**07.11.1990 Patentblatt 1990/45**

(73) Patentinhaber: **WACKER-CHEMIE GMBH**
**D-81737 München (DE)**

(72) Erfinder:
- **Herzig, Christian, Dr. Dipl.-Chem.**
  **D-8221 Taching (DE)**
- **Gilch, Doris**
  **D-8330 Eggenfelden (DE)**

(56) Entgegenhaltungen:
**EP-A- 0 215 368**
**DE-A- 2 655 877**
**WO-A-83/03418**
**FR-A- 2 109 577**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 396 130 B1

Printed by Rank Xerox (UK) Business Services
2.13.4/3.4

## Beschreibung

Die Erfindung betrifft neue, enoxyfunktionelle Organosiliciumverbindungen, deren Herstellung und Verwendung.

Aus US-A 4 617 238 (ausgegeben 14. Oktober 1986, J.V. Crivello et al., General Electric Company) sind Organopolysiloxane bekannt, die je Molekül mindestens eine Si-gebundene vinyloxyfunktionelle Gruppe der Formel

$$H_2C{=}CH\text{-}O\text{-}G\text{-}$$

enthalten, wobei G ein Alkylenrest ist oder einen Alkylenrest bedeutet, der mindestens durch ein zweiwertiges Heteroatom oder eine Kombination von Heteroatomen unterbrochen ist. In US-A 4 617 238 sind durch Licht vernetzbare Zusammensetzungen beschrieben, die die vorstehend genannten Organopolysiloxane enthalten, sowie Oniumsalze, die die kationische Polymerisation dieser Organopolysiloxane katalysieren.

Es bestand die Aufgabe, Organosiliciumverbindungen, insbesondere Silane und Organopolysiloxane, die mindestens einen Si-gebundenen Rest Y der Formel (I) je Molekül enthalten, bereitzustellen, welche aus einfach zugänglichen Ausgangsstoffen herstellbar sind. Weiterhin bestand die Aufgabe Organopolysiloxane mit mindestens einem Si-gebundenen Rest Y der Formel (I) je Molekül bereitzustellen, welche bei Einwirkung von Licht, insbesondere Ultraviolettlicht, unter kationischer Polymerisation besonders rasch vernetzen. Diese Aufgabe wird durch die Erfindung gelöst.

Gegenstand der Erfindung sind Organosiliciumverbindungen enthaltend je Molekül mindestens einen Si-gebundenen Rest Y der Formel

$$-(CH_2)_2\text{-}R^2\text{-}(A\text{-}R^3)_z\text{-}O\text{-}CH{=}CH\text{-}CH_2\text{-}R^4 \qquad (I),$$

wobei

A -O-, -S- oder

$$-\overset{\overset{\displaystyle O}{\|}}{C}-O-,$$

$R^2$ einen linearen oder verzweigten Alkylenrest mit 1 bis 7 Kohlenstoffatom(en) je Rest oder einen Cycloalkylenrest mit 5 bis 7 Kohlenstoffatomen je Rest,

$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,

$R^4$ ein Wasserstoffatom oder einen Alkylrest mit 1 bis 4 Kohlenstoffatom(en) je Rest, und

z 0, 1, oder 2 bedeutet.

Vorzugsweise sind die erfindungsgemäßen Organosiliciumverbindungen Silane oder Organopolysiloxane.

Die Organosiliciumverbindungen sind vorzugsweise solche der allgemeinen Formel

$$R_a(R^1O)_bY_cSiO_{\frac{4-(a+b+c)}{2}} ,$$

wobei

a 0, 1, 2 oder 3, durchschnittlich 0,0 bis 3,0,

b 0, 1, 2 oder 3, durchschnittlich 0,0 bis 3,0 und

c 0 oder 1, durchschnittlich 0,01 bis 1,0 ist und die Summe $a+b+c \leq 4$, durchschnittlich 1,0 bis 4,0 ist,

R gleich oder verschieden sein kann, einen einwertigen, gegebenenfalls substituierten Kohlenwasserstoffrest mit 1 bis 18 Kohlenstoffatom(en) je Rest bedeutet,

$R^1$ gleich oder verschieden sein kann, einen einwertigen, gegebenenfalls durch ein Ethersauerstoffatom unterbrochenen Kohlenwasserstoffrest mit 1 bis 8 Kohlenstoffatom(en) je Rest bedeutet, und

Y ein Rest der Formel

$$-(CH_2)_2-R^2-(A-R^3)_z-O-CH=CH-CH_2-R^4 \quad (I)$$

ist,
wobei
A -O-, -S-, oder

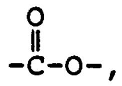

$R^2$ einen linearen oder verzweigten Alkylenrest mit 1 bis 7 Kohlenstoffatom(en) je Rest oder einen Cycloalkylenrest mit 5 bis 7 Kohlenstoffatomen je Rest,
$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,
$R^4$ ein Wasserstoffatom oder einen Alkylrest mit 1 bis 4 Kohlenstoffatom(en) je Rest;
und
z 0, 1 oder 2 bedeutet,
mit einem Molekulargewicht von vorzugsweise 188 bis 300 000 g/mol, bevorzugt 232 bis 30 000 g/mol.

Bevorzugt als Organosiliciumverbindungen mit mindestens einem Si-gebundenen Rest Y je Molekül sind Silane der Formel

$$R_dYSi(OR^1)_{3-d}$$

mit einer Viskosität von 1,5 bis 100 $mm^2 \cdot s^{-1}$ bei 25°C oder Organopolysiloxane der Formel

$$Y_cR_{3-c}SiO(SiR_2O)_n(SiRYO)_mSiR_{3-c}Y_c$$

mit einer Viskosität von mindestens 4 $mm^2 \cdot s^{-1}$ bei 25 °C, bevorzugt 4 bis 20 000 $mm^2 \cdot s^{-1}$ bei 25 °C, wobei

R, $R^1$, Y und c die oben dafür angegebenen Bedeutung haben,
d 0, 1 oder 2,
n 0 oder eine ganze Zahl von 1 bis 1000 und
m 0 oder eine ganze Zahl von 1 bis 500 bedeutet.

Beispiele für Reste R sind Alkylreste, wie der Methyl-, Ethyl-, n- Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-und der Allylrest; Cycloalkylreste, wie Cyclopentyl-, Cyclohexyl-, Cycloheptylreste und Methylcyclohexylreste; Arylreste, wie der Phenyl- Naphtyl- und Anthryl- und Phenanthrylrest; Alkarylreste, wie o-, m-, p-Tolylreste, Xylylreste und Ethylphenylreste; und Aralkylreste, wie der Benzylrest, der $\alpha$- und der $\beta$-Phenylethylrest. Bevorzugt ist der Methylrest.

Beispiele für substituierte Reste R sind Cyanalkylreste, wie der $\beta$-Cyanethylrest, und halogenierte Kohlenwasserstoffreste, beispielsweise Halogenalkylreste, wie der 3,3,3-Trifluor-n-propylrest, der 2,2,2,2′,2′,2′-Hexafluorisopropylrest, der Heptafluorisopropylrest, und Halogenarylreste, wie der o-, m-, und p-Chlorphenylrest.

Beispiele für Reste $R^1$ sind Alkylreste, wie der Methyl-, Ethyl-, n-Propyl-, iso-Propyl-, 1-n-Butyl-, 2-n-Butyl-, iso-Butyl-, und tert.-Butylrest. Bevorzugt sind der Methyl- und Ethylrest. Beispiele für einen durch mindestens ein Ethersauerstoffatom unterbrochenen Kohlenwasserstoffrest $R^1$ sind der Methoxyethylen- und Ethoxyethylenrest.

Beispiele für Alkylenreste $R^2$ sind solche der Formel

$$-CH_2-$$

$$-(CH_2)_2-$$

$$-CH(CH_3)- \text{ und}$$

$$-(CH_2)_3-.$$

Beispiele für Cycloalkylenreste $R^2$ sind der Cyclohexylenrest und der Methylcyclohexylenrest.

Bevorzugt ist als Rest $R^2$ derjenige der Formel

$$-CH_2-.$$

Bevorzugt ist A Sauerstoff -O-.

Beispiele für Reste $R^3$ sind solche der Formel

$$-(CH_2)_2-$$

$$-(CH_2)_3-$$

$$-CH_2CH(CH_3)CH_2-$$

$$-CH_2CH(OH)CH_2-$$

$$-CH_2CH(OCH_3)CH_2-$$

$$-CH_2CH(OC_2H_5)CH_2- \text{ und}$$

$$-CH_2CH(OSi(CH_3)_3)CH_2- .$$

Beispiele für Reste $R^4$ sind Alkylreste, wie der Methyl-, Ethyl-, n-Propyl-, iso-Propyl-, 1-n-Butyl-, 2-n-Butyl-, iso-Butyl-, und tert.-Butylrest. Bevorzugt ist der Rest $R^4$ ein Wasserstoffatom oder ein Methylrest.

Beispiele für Reste Y sind solche der Formel

$$-(CH_2)_3-O-CH=CH-CH_3$$

$$-(CH_2)_3-O-CH_2-CH_2-O-CH=CH-CH_3$$

$$-(CH_2)_3-O-CH=CH-CH_2-CH_3 \text{ und}$$

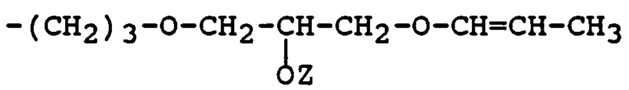
,

wobei Z ein Wasserstoffatom oder einen Rest der Formel $-CH_3$, $-C_2H_5$ oder $-Si(CH_3)_3$ bedeutet.

Beispiele für bevorzugte Reste Y sind solche der Formel

$$-(CH_2)_3-O-CH=CH-CH_3$$

$$-(CH_2)_3-O-CH_2-CH_2-O-CH=CH-CH_3 \text{ und}$$

$$-(CH_2)_3-O-CH=CH-CH_2-CH_3 ,$$

wobei der Rest Y der Formel

$$-(CH_2)_3-O-CH=CH-CH_3 .$$

besonders bevorzugt ist.

Gegenstand der Erfindung ist weiterhin ein Verfahren zur Herstellung von Organosiliciumverbindungen mit mindestens einem Si-gebundenen Rest Y der Formel (I) je Molekül, dadurch gekennzeichnet, daß zunächst

in einer 1. Stufe

eine organische Verbindung (1) der Formel

$$H_2C=CH-R^2-(A-R^3)_z-O-CH_2-CH=CH-R^4$$

wobei $R^2$, $R^3$, $R^4$, A und z die oben dafür angegebene Bedeutung haben,
an eine Organosiliciumverbindung (2) mit mindestens einem Si-gebundenen Wasserstoffatom in Gegenwart von die Anlagerung von Si-gebundenem Wasserstoff an die aliphatische Doppelbindung förderndem Katalysator (3) angelagert wird,
wobei eine Organosiliciumverbindung mit mindestens einem Si-gebundenen Rest $Y^1$ der Formel

$$-(CH_2)_2-R^2-(A-R^3)_z-O-CH_2-CH=CH-R^4 \quad (II),$$

wobei $R^2$, $R^3$, $R^4$, A und z die oben dafür angegebene Bedeutung haben,
erhalten wird und dann

in einer 2. Stufe

die Doppelbindung in dem Rest $Y^1$ zu dem dem Ethersauerstoffatom benachbarten Kohlenstoffatom umgelagert wird durch Erhitzen der in der 1. Stufe gewonnenen Organosiliciumverbindung mit mindestens einem Si-gebundenen Rest $Y^1$ in Gegenwart von eine solche Umlagerung der Doppelbindung förderndem Katalysator (4),
wobei eine Organosiliciumverbindung mit mindestens einem Si-gebundenen Rest Y der Formel

$$-(CH_2)_2-R^2-(A-R^3)_z-O-CH=CH-CH_2-R^4 \quad (I),$$

wobei $R^2$, $R^3$, $R^4$, A und z die oben dafür angegebene Bedeutung haben,
erhalten wird.

Zur Herstellung der erfindungsgemäßen Organosiliciumverbindungen werden als Organosiliciumverbindung (2) mit mindestens einem Si-gebundenen Wasserstoffatom vorzugsweise Silane (2a) der Formel

$$R_dHSiX_{3-d},$$

wobei R und d die oben dafür angegebene Bedeutung haben, X gleich oder verschieden sein kann, ein Halogenatom, vorzugsweise ein Chloratom, oder ein Rest der Formel $-OR^1$ ist, wobei $R^1$ die oben dafür angegebene Bedeutung hat, oder Organopolysiloxane (2b) der Formel

$$H_cR_{3-c}SiO(SiR_2O)_o(SiRHO)_pSiR_{3-c}H_c,$$

wobei R und c die oben dafür angegebene Bedeutung haben

o 0 oder eine ganze Zahl von 1 bis 1000 und
p 0 oder eine ganze Zahl von 1 bis 500 bedeutet,

mit der Maßgabe, daß mindestens ein Si-gebundenes Wasserstoffatom pro Molekül enhalten ist,
verwendet.

Organopolysiloxane mit mindestens einem Si-gebundenen Rest Y der Formel (I) je Molekül können aus Silanen in einem abgewandelten Verfahren hergestellt werden, bei dem zunächst

in einer 1. Stufe

eine organische Verbindung (1) der Formel

$$H_2C=CH-R^2-(A-R^3)_z-O-CH_2-CH=CH-R^4$$

wobei $R^2$, $R^3$, $R^4$, A und z die oben dafür angegebene Bedeutung haben,
an ein Silan (2a) mit einem Si-gebundenen Wasserstoffatom der Formel

$$R_dHSiX_{3-d},$$

wobei R, X und d die oben dafür angegebene Bedeutung haben, in Gegenwart von die Anlagerung von Si-gebundenem Wasserstoff an die aliphatische Doppelbindung förderndem Katalysator (3) angelagert wird,
wobei ein Silan mit einem Si-gebundenen Rest $Y^1$ der Formel

$$-(CH_2)_2-R^2-(A-R^3)_z-O-CH_2-CH=CH-R^4 \quad (II),$$

worin $R^2$, $R^3$, $R^4$, A und z die oben dafür angegebene Bedeutung haben,
erhalten wird,
aus dem anschließend durch Mischhydrolyse mit Chlor- oder Alkoxysilanen und/oder durch Kondensation mit kondensationsfähigen Organopolysiloxanen in an sich bekannter Weise ein Organopolysiloxan mit mindestens einem Si-gebundenen Rest $Y^1$ der Formel

$$-(CH_2)_2-R^2-(A-R^3)_z-O-CH_2-CH=CH-R^4 \qquad (II),$$

wobei $R^2$, $R^3$, $R^4$, A und z die oben dafür angegebene Bedeutung haben,
erhalten wird und
in einer 2. Stufe
die Doppelbindung in dem Rest $Y^1$ des Organopolysiloxans zu dem dem Ethersauerstoffatom benachbarten Kohlenstoffatom umgelagert wird,
durch Erhitzen des in der 1. Stufe gewonnenen Organopolysiloxans mit mindestens einem Rest $Y^1$ in Gegenwart von eine solche Umlagerung der Doppelbindung förderndem Katalysator (4),
wobei ein Organopolysiloxan mit mindestens einem Si-gebundenen Rest Y der Formel

$$-(CH_2)_2-R^2-(A-R^3)_z-O-CH=CH-CH_2-R^4 \qquad (I),$$

wobei $R^2$, $R^3$, $R^4$, A und z die oben dafür angegebene Bedeutung haben,
erhalten wird.

Die organischen Verbindungen (1) werden bei der in der 1. Stufe des erfindungsgemäßen Verfahrens durchgeführten Additionsreaktion vorzugsweise in solchen Mengen eingesetzt, daß mindestens 1 Mol, bevorzugt mindestens 1,5 Mol, organische Verbindung (1) je Grammatom Si-gebundener Wasserstoff in der Organosiliciumverbindung (2) vorliegen. Wenn $R^4$ in der organischen Verbindung (1) Wasserstoff ist, wird die organische Verbindung (1) besonders bevorzugt in solchen Mengen eingesetzt, daß 4 bis 8 Mol organische Verbindung je Grammatom Si-gebundener Wasserstoff in der Organosiliciumverbindung (2) vorliegen. Durch diesen Überschuß an organischer Verbindung (1) wird erreicht, daß die Addition nicht an beiden endständigen aliphatischen Doppelbindungen stattfindet, sondern jeweils nur an einer, die Diaddition also zurückgedrängt wird.

Beispiele für organische Verbindungen (1), die bei der in der 1. Stufe des erfindungsgemäßen Verfahrens stattfindenden Additionsreaktion, eingesetzt werden, sind solche der Formel

$CH_2=CHCH_2OCH_2CH=CH_2$ (Diallylether)

$CH_2=CHCH_2OCH_2CH_2OCH_2CH=CH_2$ (Ethylenglykol-bisallylether)

$CH_2=CHCH_2OCH_2CH=CHCH_3$ (Allyl-but-2-enyl-ether) und

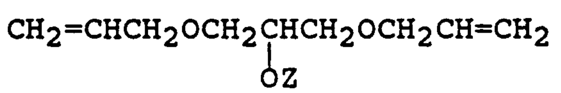
,

wobei Z ein Wasserstoffatom oder einen Rest der Formel $-CH_3$, $-C_2H_5$ oder $-Si(CH_3)_3$ bedeutet.

Als organische Verbindungen (1) werden bei dem erfindungsgemäßen Verfahren bevorzugt Diallylether, Ethylenglykolbisallylether und Allyl(but-2-enyl)ether, eingesetzt, wobei Diallylether besonders bevorzugt ist.

Die organischen Verbindungen (1) sind leicht erhältlich, wie im folgenden einige beispielhafte Reaktionen, die unter basischen Bedingungen und Phasen-Transfer-Katalyse ablaufen, zeigen:

$$CH_2=CHCH_2Cl + HOCH_2CH=CHR^4 \longrightarrow CH_2=CHCH_2OCH_2CH=CHR^4$$
$$(R^4 = H,\ -CH_3)$$

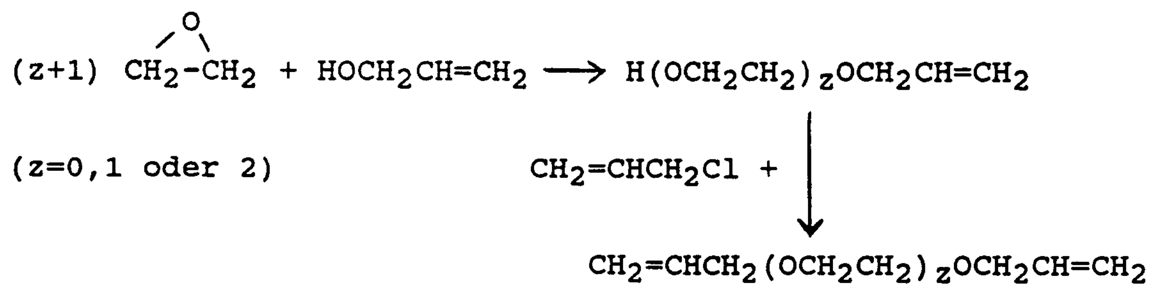


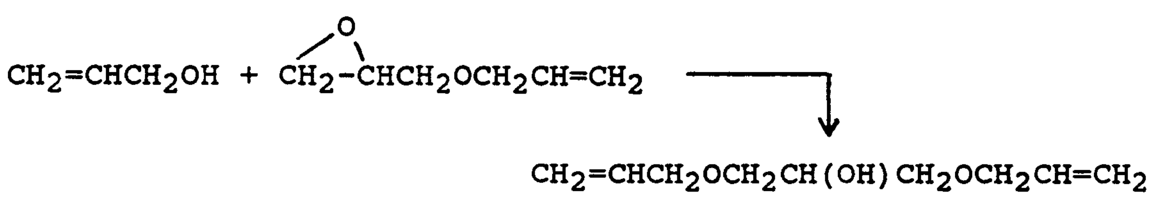

Verfahren zu ihrer Herstellung sind beispielsweise in H. H. Freedman und R. A. Dubois, Tetrahedron Letters No. 38, Seite 3251 bis 3254, 1975; Houben-Weyl, Methoden der organischen Chemie, Band VI/3, Seite 24 bis 32, 1965; und GB-A 913 919 beschrieben.

Als die Anlagerung von Si-gebundenem Wasserstoff an aliphatische Doppelbindung fördernde Katalysatoren (3) können auch bei dem erfindungsgemäßen Verfahren die gleichen Katalysatoren eingesetzt werden, die auch bisher zur Förderung der Anlagerung von Si-gebundenen Wasserstoff an aliphatische Doppelbindungen eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6*6H_2O$, $Na_2PtCl_4*4H_2O$, Platin-Olefin-Komplexe, Platin-Alkohol-Komplexe, Platin-Alkoholat-Komplexe, Platin-EtherKomplexe, Platin-Aldehyd-Komplexe, Platin-Keton-Komplexe, einschließlich Umsetzungsprodukten aus $H_2PtCl_6*6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin gemäß US-A 4 292 434, wie das Umsetzungsprodukt aus in 1-Octen gelöstem Platintetrachlorid mit sec.-Butylamin, oder Ammonium-Platinkomplexe gemäß EP-B 110 370.

Der Katalysator (3) wird vorzugsweise in Mengen von 0,1 bis 10 000 ppm (Gewichtsteilen je Million Gewichtsteilen), bevorzugt in Mengen von 10 bis 100 ppm, jeweils berechnet als elementares Metall ausgewählt aus der Gruppe der Platinmetalle und bezogen auf das Gesamtgewicht von organischer Verbindung (1) und Organosiliciumverbindung (2) mit mindestens einem Si-gebundenem Wasserstoffatom.

Die Additionsreaktion (oder Hydrosilylierungsreaktion) in der 1. Stufe des erfindungsgemäßen Verfahrens wird vorzugsweise beim Druck der umgebenden Atmosphäre, also etwa bei 1020 hPa (abs.), durchgeführt, sie kann aber auch bei höheren oder niedrigeren Drücken durchgeführt werden. Ferner wird die Additionsreaktion vorzugsweise bei einer Temperatur von 40 bis 200 °C, bevorzugt 70 bis 140 °C, durchgeführt.

Die in der 1. Stufe des erfindungsgemäßen Verfahrens durchgeführte Hydrosilylierung ergibt Organosiliciumverbindungen mit mindestens einem Si-gebundenen Rest $Y^1$ der Formel

$$-(CH_2)_2-R^2-(A-R^3)_z-O-CH_2-CH=CH-R^4 \qquad (II),$$

wobei $R^2$, $R^3$, $R^4$, A und z die oben dafür angegebene Bedeutung haben. Von der Organosiliciumverbindung mit mindestens einem Si-gebundenen Rest $Y^1$, wird überschüssige organische Verbindung (1) destillativ entfernt.

Die in der 1. Stufe des erfindungsgemäßen Verfahrens erhaltenen Silane mit einem Si-gebundenen Rest $Y^1$ der Formel (II) können durch Mischhydrolyse mit Chlor- oder Alkoxysilanen und/oder durch Kondensation mit kondensationsfähigen Organopolysiloxanen in an sich bekannter Weise zu Organopolysiloxanen mit mindestens einem Si-gebundenen Rest $Y^1$ der Formel (II) je Molekül umgesetzt werden.

Vorzugsweise werden als Chlor- oder Alkoxysilane solche der Formel

$$R_eSiX_{4-e} ,$$

wobei R die oben dafür angegebene Bedeutung hat, X gleich oder verschieden sein kann, ein Chloratom oder ein Rest der Formel $-OR^1$ ist, wobei $R^1$ die oben dafür angegebene Bedeutung hat, und
e 0, 1, 2, oder 3 ist,
eingesetzt.

Vorzugsweise werden als kondensationsfähige Organopolysiloxane solche der Formel

$$HOR_2SiO(SiR_2O)_qH ,$$

wobei R die oben dafür angegebene Bedeutung hat und q eine ganze Zahl im Wert von mindestens 1 ist,
oder aus cyclischen Organopolysiloxanen der Formel

$$(SiR_2O)_r ,$$

wobei R die oben dafür angegebene Bedeutung hat und r eine ganze Zahl im Wert von 3 bis 10 bedeutet,
durch Kondensation und/oder Äquilibrierung in an sich bekannter Weise gewonnene lineare, kondensationsfähige Organopolysiloxane eingesetzt.

Als die Umlagerung der Doppelbindung in dem Rest $Y^1$ der Formel (II) zu dem dem Ethersauerstoff benachbarten Kohlenstoffatom fördernde Katalysatoren (4) können in der 2. Stufe des erfindungsgemäßen Verfahrens die gleichen Katalysatoren eingesetzt werden, die auch bisher zur Förderung einer solchen Umlagerung der Doppelbindung eingesetzt werden konnten. Beispiele für Katalysatoren (4) sind metallisches oder feinverteiltes Platin, Ruthenium, Rhodium und Palladium, wobei sich diese Metalle jeweils auf Trägern wie Aktivkohle befinden können, und Verbindungen oder Komplexe dieser Elemente, die in der Organosiliciumverbindung mit mindestens einem Si-gebundenen Rest $Y^1$ der Formel (II) löslich sind oder an Trägern wie Aktivkohle oder polymere Phosphinliganden fixiert sind. Beispiele für bevorzugte Katalysatoren (4) sind solche der Formel $RuCl_2(PPh_3)_3$, $RuHCl(PPh_3)_3$, $RuHCl(CO)(PPh_3)_3$, $RuH_2(CO)(PPh_3)_3$ und $RuH_2(PPh_3)_4$.

Der Katalysator (4) wird vorzugsweise in Mengen von 0,1 bis 1000 mg, bevorzugt 1 bis 50 mg, jeweils berechnet als elementares Metall, je Grammol Si-gebundener Rest $Y^1$ in der in der 1. Stufe des erfindungsgemäßen Verfahrens erhaltenen Organosiliciumverbindung mit mindestens einem Si-gebundenen Rest $Y^1$ der Formel (II), eingesetzt.

Zur Umlagerung der Doppelbindung zu dem dem Ethersauerstoffatom benachbarten Kohlenstoffatom in dem Rest $Y^1$ der Formel (II) wird die aus der 1. Stufe des erfindungsgemäßen Verfahrens gewonnene Organosiliciumverbindung mit mindestens einem Si-gebundenen Rest $Y^1$ der Formel (II) mit dem Katalysator (4) vermischt und die Mischung erhitzt. Die Umsetzung wird vorzugsweise bei einer Temperatur von 80 bis 200 °C, bevorzugt von 100 bis 150°C, vorzugsweise beim Druck der umgebenden Atmosphäre, als etwa bei 1020 hPa (abs.), und vorzugsweise in einer Zeit von 2 bis 20 Stunden, bevorzugt 4 bis 10 Stunden, durchgeführt. Vorzugsweise wird kein Lösungsmittel mitverwendet.

Die in der 2. Stufe des erfindungsgemäßen Verfahrens erhaltenen Organosiliciumverbindung mit mindestens einem Si-gebundenen Rest Y der Formel (I) ist ein cis-/trans-Isomerengemisch in Bezug auf den Rest Y, wobei das cis-Isomere meistens überwiegt. Beispielsweise wenn Y ein 1-Propenyloxypropylrest ist, so liegt folgendes Isomerengemisch vor:

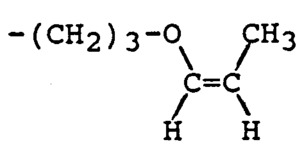

cis-

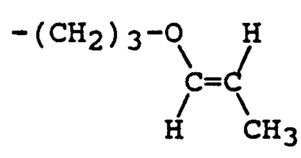

trans-

Schließlich können die erfindungsgemäßen Organosiliciumverbindungen mit mindestens einem Si-gebundenen Rest Y der Formel (I) auch durch Anlagerung einer organischen Verbindung der Formel

$$H_2C{=}CH{-}R^2{-}(A{-}R^3)_z{-}O{-}CH{=}CH{-}CH_2{-}R^4 ,$$

wobei $R^2$, $R^3$, $R^4$, A und z die oben dafür angegebene Bedeutung haben,
an eine Organosiliciumverbindung (2) mit mindestens einem Si-gebundenen Wasserstoffatom in Gegenwart von die Anlagerung von Si-gebundenem Wasserstoff an die aliphatische Doppelbindung förderndem Katalysator (3) hergestellt werden.

Die erfindungsgemäßen Organopolysiloxane mit mindestens einem Si-gebundenen Rest Y der Formel (I) sind in einer durch Licht initiierten, kationischen Polymerisation vernetzbar. Als Katalysatoren für die durch Licht initiierte Vernetzung können beispielsweise die in US-A 4 279 717 (ausgegeben 21. Juli 1981, Eckberg et al., General Electric Company) beschriebenen Bis-(dodecylphenyl)iodoniumsalze, wie Bis-(dodecylphenyl)iodoniumhexafluoroantimonat oder Bis-(dodecylphenyl)iodoniumhexafluoroarsenat verwendet werden.

Gegenstand der Erfindung ist daher die Verwendung von Organopolysiloxanen mit mindestens einem Si-gebundenen Rest Y je Molekül, wobei Y die oben dafür angegebene Bedeutung hat, in durch Licht vernetzbare Zusammensetzungen auf Grundlage von vorstehend genannten Organopolysiloxanen.

Vorzugsweise werden die erfindungsgemäßen Organopolysiloxane mit mindestens einem Si-gebundenen Rest Y der Formel (I) durch Ultraviolettlicht vernetzt, wobei solches mit Wellenlängen im Bereich von 200 bis 400 nm bevorzugt ist. Das Ultraviolettlicht kann z.B. in Xenon-, Quecksilbernieder-, Quecksilbermittel- oder Quecksilberhochdrucklampen erzeugt werden. Zur Vernetzung durch Licht ist auch solches mit einer Wellenlänge von 400 bis 600 nm, also sogenanntes "Halogenlicht", geeignet. Die erfindungsgemäßen Organopolysiloxane mit mindestens einem Si-gebundenen Rest Y der Formel (I) können durch Licht im sichtbaren Bereich vernetzt werden, wenn handelsübliche Photosensibilisatoren mitverwendet werden.

Gegenstand der Erfindung ist schließlich auch die Verwendung der erfindungsgemäßen Organopolysiloxane mit mindestens einem Si-gebundenen Rest Y, wobei Y die oben dafür angegebene Bedeutung hat, zur Herstellung von durch Licht vernetzbare Überzüge.

Beispiele für Oberflächen, auf welche die erfindungsgemäßen Überzüge aufgebracht werden können, sind diejenigen von Papier, Holz, Kork, Kunststoffolien, z.B. Polyethylenfolien oder Polypropylenfolien, keramischen Gegenständen, Glas, einschließlich Glasfasern, Metallen, Pappen, einschließlich solcher aus Asbest, und von gewebtem und ungewebtem Tuch aus natürlichen oder synthetischen organischen Fasern.

Das Auftragen der erfindungsgemäßen Organopolysiloxane mit mindestens einem Si-gebundenen Rest Y der Formel (I) auf die zu überziehenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravurüberzugsvorrichtung, Messer-oder Rakelbeschichtung.

Beispiel 1:

a) Zu einer Lösung von 600 g NaOH (15 Mol) in 600 ml Wasser werden 28 g Trimethylbenzylammoniumchlorid (0,1 Mol) zugegeben. Zu dieser Mischung werden dann 290 g Allylalkohol (5,0 Mol) und 425 g Allylchlorid (5,5 Mol) zugegeben. Die Reaktionsmischung wird acht Stunden bei 40 bis 60°C erhitzt. Der entstandene Natriumchlorid-Niederschlag wird dann weitgehend in Wasser aufgelöst. Die organische Phase wird abgetrennt und mit Natriumsulfat getrocknet. Mittels Destillation über eine kurze Vigreuxkolonne werden bei 92 bis 94°C 415 g Diallylether (85 % d. Th.) erhalten.

b) In einen Dreihalskolben mit Innenthermometer und Rückflußkühler werden 294 g Diallylether, der wie oben unter a) beschrieben hergestellt wurde, zusammen mit 0,5 ml eines Umsetzungsproduktes aus in 1-Octen gelöstem Platintetrachlorid mit sec.-Butylamin gemäß US-A 4 292 434,
das 20 mg Platin, berechnet als Element, enthält, vorgelegt und auf Rückflußtemperatur erhitzt. Zu dieser Mischung werden dann innerhalb von zwei Stunden 118 g Methylhydrogendiethoxysilan zugetropft, wobei die Gasraumtemperatur zwischen 86 und 91°C bleibt. Bei dieser Temperatur läßt man die Reaktionsmischung weitere zwei Stunden nachreagieren. Anschließend wird der überschüssige Diallylether über eine kurze Füllkörperkolonne abdestilliert und es werden dann durch fraktionierte Destillation über eine Vigreuxkolonne bei 40 bis 42°C und 3 hPa (abs.) 125 g reines (Allyloxypropyl)methyldiethoxysilan erhalten.

c) Zu 125 g des oben unter b) beschriebenen (Allyloxypropyl)methyldiethoxysilans werden 200 ppm (bezogen auf das Gesamtgewicht des eingesetzten Silans) Tris-(triphenylphosphin)-ruthenium(II)-dichlorid zugegeben. Nach vier Stunden Erhitzen bei 150°C (95 % Umsatz) wird das (1-propenyloxypropyl)methyldiethoxysilan der Formel,

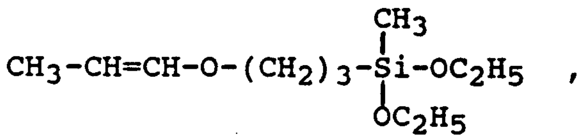

das als cis-/trans-Isomerengemisch vorliegt, erhalten. Folgendes $^1$H-NMR-Spektrum wird von dem Produkt erhalten:
$^1$H-NMR-Spektrum ($CDCl_3$):

| | |
|---|---|
| trans-Isomer: (40 Mol-%) δ = | 0,12 ppm (s, 3H, Si-$CH_3$), |
| | 0,65 ppm (m, 2H, Si-$CH_2$-), |
| | 1,22 ppm (t, 6H, Si-O-$CH_2$-$C\underline{H}_3$), |
| | 1,54 ppm (dd, 3H, $C\underline{H}_3$-CH=), |
| | 1,70 ppm (m, 2H, Si-$CH_2$-$C\underline{H}_2$-), |
| | 3,59 ppm (t, 2H, -O-$C\underline{H}_2$-$CH_2$-), |
| | 3,76 ppm (q, 4H, Si-O-$CH_2$-), |
| | 4,75 ppm (dq, 1H, $CH_3$-C$\underline{H}$=), |
| | 6,19 ppm (dq, 1H, =CH-O-). |
| cis-Isomer: (60 Mol-%) δ = | 0,13 ppm (s, 3H, Si$CH_3$), |
| | 0,65 ppm (m, 2H, Si-$CH_2$-), |
| | 1,22 ppm (t, 6H, Si-O-$CH_2$-$C\underline{H}_3$), |
| | 1,58 ppm (dd, 3H, $C\underline{H}_3$-CH=), |
| | 1,70 ppm (m, 2H, Si-$CH_2$-$C\underline{H}_2$-), |
| | 3,69 ppm (t, 2H, -O-$C\underline{H}_2$-$CH_2$-), |
| | 3,77 ppm (q, 4H, Si-O-$CH_2$-), |
| | 4,36 ppm (dq, 1H, $CH_3$-C$\underline{H}$=), |
| | 5,92 ppm (dq, 1H, =CH-O-). |

Beispiel 2:

a) 70 g des in Beispiel 1 unter b) beschriebenen (Allyloxypropyl)methyldiethoxysilans werden mit 16 g Trimethylethoxysilan und 15 g Wasser sowie 2 g stark saurem Ionenaustauscher sechs Stunden lang bei 80°C gerührt. Die Reaktionsmischung wird dann filtriert und im Vakuum (5 hPa) eingedampft. Als Rückstand verbleiben 50 g Produkt, das eine Viskosität von 15 $mm^2 \cdot s$ und ein Verhältnis von Si-gebundenem Allyloxypropylrest zu Si-gebundenem Methylrest von 1 : 2,33 aufweist, was somit einem Siloxan der durchschnittlichen Zusammensetzung

$$(CH_3)_3SiO[CH_3Si(C_3H_6OCH_2CH{=}CH_2)O]_{4,5}Si(CH_3)_3$$

entspricht. Zur Entfernung von Säurespuren wird das so erhaltene Siloxan 15 Stunden lang mit MgO in Mengen von 5 Gew.-%, bezogen auf das Gesamtgewicht des Siloxans, gerührt und anschließend wird die Mischung filtriert.
b) Zu 50 g des oben unter a) beschriebenen Siloxans werden 200 ppm (bezogen auf das Gesamtgewicht des Siloxans) Tris(triphenylphosphin)-ruthenium(II)-dichlorid zugegeben. Nach acht Stunden Erhitzen bei 130°C wird ein Siloxan der durchschnittlichen Zusammensetzung

$$(CH_3)_3SiO[CH_3Si(C_3H_6OCH{=}CH\text{-}CH_3)O]_{4,5}Si(CH_3)_3$$

erhalten mit einem Verhältnis von cis-Isomer zu trans-Isomer von 2 : 1 und mit folgendem $^1$H-NMR-Spektrum:
$^1$H-NMR-Spektrum ($CDCl_3$):

| | |
|---|---|
| trans-Isomer: δ = | 4,77 ppm (dq, 1H, $CH_3$-C$\underline{H}$=), |
| | 6,18 ppm (dq, 1H, =CH-O-). |
| cis-Isomer: δ = | 4,35 ppm (dq, 1H, $CH_3$-C$\underline{H}$=), |
| | 5,92 ppm (dq, 1H, =CH-O-). |

Beispiel 3:

a) Die in Beispiel 1 unter b) beschriebene Arbeitsweise wird wiederholt mit der Abänderung, daß anstelle der 118 g Methylhydrogendiethoxysilan 101 g Methylhydrogendichlorsilan eingesetzt werden. Durch fraktionierte Destillation bei 80 bis 85°C und 7 hPa (abs.) wird mit 70 %iger Ausbeute (Allyloxypropyl)methyldichlorsilan erhalten.
b) 520 g einer Mischung von cyclischen Dimethylpolysiloxanen mit 3 bis 7 Siloxaneinheiten je Molekül werden zwei Tage lang zusammen mit 62,4 g KOH bei 120°C gerührt, wobei das bei der Umsetzung entstehende Wasser entfernt wird. Das so erhaltene, lineare Kalium-Siloxanolat wird mit 300 g Toluol verdünnt und auf + 10°C gekühlt. Zu dieser Lösung werden dann 96 g (Allyloxypropyl)methyldichlorsilan, das wie oben unter a) beschrieben hergestellt wurde, und eine Lösung von 11 g Trimethylchlorsilan in 100 g Toluol so zugetropft, daß die Temperatur der Reaktionsmischung 20°C nicht übersteigt. Nachdem die Reaktionsmischung eine Stunde bei Raumtemperatur nachreagiert hat, werden zu der Reaktionsmischung 300 ml Wasser zugegeben und die Reaktionsmischung solange gerührt bis zwei klare Phasen entstanden sind. Die wäßrige Phase wird entfernt und die organische Phase mit Natriumbicarbonatlösung von Säurespuren befreit. Diese Lösung wird dann azeotrop entwässert und es wird durch anschließendes Eindampfen im Vakuum bei 5 hPa (abs.) ein mit Trimethylsiloxygruppen endgestoppertes Diorganopolysiloxan aus Dimethylsiloxaneinheiten und (Allyloxypropyl)methylsiloxaneinheiten mit einem durchschnittlichen Verhältnis von Si-gebundenen Allyloxypropylresten zu Si-gebundenen Methylresten von 0,028 und einer Viskosität von ca. 100 $mm^2 \cdot s$ bei 25°C erhalten.
c) Zu 50 g des oben unter b) erhaltenen Diorganopolysiloxans werden 200 ppm (bezogen auf das Gesamtgewicht des Diorganopolysiloxans) Tris-(triphenylphosphin)-ruthenium (II)-dichlorid zugegeben. Nach acht Stunden bei 130°C wird ein Diorganopolysiloxan mit einer Viskosität von ca. 230 $mm^2 \cdot s$ bei 25°C erhalten, dessen Allyloxypropylreste annähernd quantitativ in 1-Propenyloxypropylreste umgelagert sind. Das Verhältnis von trans-Isomeren zu cis-Isomeren beträgt 35 : 65. Folgendes $^1$H-NMR-Spektrum wird erhalten:
$^1$H-NMR-Spektrum ($CDCl_3$):

| | |
|---|---|
| trans-Isomer: δ = | 4,7 ppm (1H, $CH_3$-C$\underline{H}$=), |
| | 6,1 ppm (1H, =CH-O-). |
| cis-Isomer: δ = | 4,3 ppm (1H, $CH_3$-C$\underline{H}$=), |
| | 5,8 ppm (1H, =CH-O-). |

Beispiel 4:

a) Ethylenglycol-bisallylether wird durch Umsetzung von Allylchlorid mit Ethylenglykol analog der in Beispiel 1 unter a) beschriebenen Herstellung von Diallylether erhalten.
b) Zu 142 g Ethylenglycol-bisallylether werden 1,5 ml eines Umsetzungsproduktes aus in 1-Octen gelöstem Platintetrachlorid mit sec.-Butylamin gemäß US-A 4 292 434, das 60 mg Platin, berechnet als Element, enthält, zugegeben. Zu dieser auf 130°C erhitzten Mischung werden 69 g eines Dimethylhydrogensiloxygruppen als endständige Einheiten aufweisenden Dimethylpolysiloxans mit einem durchschnittlichen Molekulargewicht von 690 g/mol zugetropft. Nach Abreaktion von mehr als 99 % aller Si-gebundenen Wasserstoffatome in dem Dimethylpolysiloxan werden alle bei 100°C und 5 hPa (abs.) flüchtigen Bestandteile destillativ entfernt. Das klare Produkt, ein Dimethylpolysiloxan mit endständigen Einheiten der Formel

$$CH_2=CHCH_2OCH_2CH_2O(CH_2)_3(CH_3)_2SiO_{1/2}$$

und einem durchschnittlichen Verhältnis von Si-gebundenen Allyloxyethyloxypropylresten zu Si-gebundenen Methylresten von 0,104 hat eine Viskosität von 13,8 $mm^2 \cdot s$ bei 25°C.
c) Zu 50 g des oben unter b) erhaltenen Dimethylpolysiloxans werden 200 ppm (bezogen auf das Gesamtgewicht des Dimethylpolysiloxans) $RuHCl(PPh_3)_3$ zugegeben. Nach acht Stunden Erhitzen bei 130°C wird ein Dimethylpolysiloxan mit einer Viskosität von 23,4 $mm^2 \cdot s$ erhalten, dessen Allyloxyethyloxypropylgruppen annähernd vollständig (97 % Umsatz gemäß $^1$HNMR-Spektrum) zu 1-Propenyloxyethyloxypropylgruppen umgelagert sind. Das Verhältnis von trans-Isomeren zu cis-Isomeren beträgt 26 : 74.
$^1$H-NMR-Spektrum ($CDCl_3$):

| | |
|---|---|
| trans-Isomer: δ = | 4,79 ppm (dq, 1H, $CH_3$-C$\underline{H}$=), |
| | 6,26 ppm (dq, 1H, =CH-O-). |
| cis-Isomer: δ = | 4,40 ppm (dq, 1H, $CH_3$-C$\underline{H}$=), |
| | 5,98 ppm (dq, 1H, =CH-O-). |

Beispiel 5:

a) Allyl(but-2-enyl)ether wird durch Umsetzung von But-2-en-1-ol mit Allylchlorid analog der in Beispiel 1 unter a) beschriebenen Herstellung von Diallylether erhalten.

b) In einem Dreihalskolben mit Rückflußkühler, Rührer und Tropftrichter werden 84 g Allyl(but-2-enyl)ether auf Rückfluß (ca. 120°C) erhitzt. Innerhalb von zwei Stunden werden dazu eine Lösung von 82 g Triethoxysilan, in dem 2 mg Platin, berechnet als Element, in Form eines Umsetzungsproduktes aus in 1-Octen gelöstem Platintetrachlorid mit sec.-Butylamin gemäß US-A 4 292 434, zugetropft. Nach weiteren fünf Stunden Erhitzen unter Rückfluß sind mehr als 99 % der Si-gebundenen Wasserstoffatome abreagiert. Das so erhaltene Vorprodukt, (But-2-enyloxypropyl)triethoxysilan, wird bei 104°C und 7 hPa (abs.) destillativ gereinigt und enthält 5 Gew.-%, bezogen auf das Gesamtgewicht des Vorprodukts, (But-1-enyloxypropyl)triethoxysilan.

c) Zu 50 g des unter b) erhaltenen Vorproduktes werden 200 ppm (bezogen auf das Gesamtgewicht des Vorproduktes) Tris(triphenylphosphin)-ruthenium(II)-dichlorid zugegeben. Nach acht Stunden Erhitzen auf 130°C wird mit einer Ausbeute von 70 % das (But-1-enyloxypropyl)triethoxysilan erhalten. Das Verhältnis von trans-Isomeren zu cis-Isomeren beträgt 35 : 65. Von dem Produkt wird folgendes $^1$H-NMR-Spektrum erhalten:
$^1$H-NMR-Spektrum ($CDCl_3$):

trans-Isomer: δ =
0,63 ppm (m, 2H, $Si-CH_2-$),
0,93 ppm (t, 3H, $C\underline{H}_3-CH_2-CH=$)
1,19 ppm (t, 9H, $Si-O-CH_2-C\underline{H}_3$),
1,70 ppm (m, 2H, $Si-CH_2-C\underline{H}_2-$),
1,89 ppm (ddq,2H, $CH_3-C\underline{H}_2-CH=$)
3,55 ppm (t, 2H, $-O-C\underline{H}_2-CH_2-$),
3,76 ppm (q, 6H, $Si-O-CH_2-$),
4,72 ppm (dt, 1H, $CH_3-CH_2-C\underline{H}=CH-$)
6,14 ppm (dt, 1H, $CH_3-CH_2-CH=C\underline{H}-$)

cis-Isomer: δ =
0,63 ppm (m, 2H, $Si-CH_2-$),
0,92 ppm (t, 3H, $C\underline{H}_3-CH_2-CH=$)
1,19 ppm (t, 9H, $Si-O-CH_2-C\underline{H}_3$),
1,70 ppm (m, 2H, $Si-CH_2-C\underline{H}_2-$),
2,04 ppm (ddq,2H, $CH_3-C\underline{H}_2-CH=$)
3,63 ppm (t, 2H, $-O-C\underline{H}_2-CH_2-$),
3,76 ppm (q, 6H, $Si-O-CH_2-$),
4,25 ppm (dt, 1H, $CH_3-CH_2-C\underline{H}=CH-$)
5,81 ppm (dt, 1H, $CH_3-CH_2-CH=C\underline{H}-$)

Beispiel 6:

a) 240 g eines endständige Trimethylsiloxygruppen aufweisenden Diorganopolysiloxans aus Methylhydrogensiloxaneinheiten und Dimethylsiloxaneinheiten, welches 0,08 Gew.-% Si-gebundenen Wasserstoff aufweist und eine durchschnittliche Kettenlänge von 80 besitzt, werden mit 120 g Diallylether und 0,2 g eines Umsetzungsproduktes aus in 1-Octen gelöstem Platintetrachlorid mit sec.-Butylamin gemäß US-A 4 292 434, das 8 mg Platin, berechnet als Element, enthält, unter Rückfluß solange erhitzt, bis nur mehr 2 % des eingesetzten Si-gebundenen Wasserstoffs nachweisbar sind. Der überschüssige Diallylether wird bei 60°C und 5 hPa (abs.) abdestilliert. Als Vorprodukt wird ein endständige Trimethylsiloxygruppen aufweisendenes Diorganopolysiloxan aus Methyl(allyloxypropyl)siloxaneinheiten und Dimethylsiloxaneinheiten mit einer Viskosität von 460 $mm^2 \cdot s$ bei 25°C erhalten.

b) Zu 50 g des unter a) erhaltenen Vorproduktes werden 200 ppm (bezogen auf das Gesamtgewicht des Vorproduktes) $RuHCl(PPh_3)_3$ zugegeben. Nach acht Stunden Erhitzen bei 130°C wird als Produkt ein endständige Trimethylsiloxygruppen aufweisendes Diorganopolysiloxan aus Methyl(1-propenyloxypropyl)siloxaneinheiten und Dimethylsiloxaneinheiten erhalten. Das Verhältnis von trans-Isomeren zu cis-Isomeren beträgt 34 : 66. Für das Produkt wird folgendes $^1$H-NMR-Spektrum erhalten:
$^1$-HNMR-Spektrum ($CDCl_3$):

trans-Isomer: δ =
4,7 ppm (1H, $CH_3-C\underline{H}=$),
6,2 ppm (1H, $=CH-O-$).

cis-Isomer: δ =
4,3 ppm (1H, $CH_3-C\underline{H}=$),
5,9 ppm (1H, $=CH-O-$).

Beispiel 7:

Zu 50 g des in Beispiel 6 hergestellten Produktes werden 2 g einer 50 %-igen Lösung von Bis-(dodecylphenyl)jodoniumhexafluoroantimonat, das gemäß US-A 4 279 717 hergestellt wurde, in Propenylencarbonat zugegeben. Die Mischung wird mittels einer Rakel auf eine Polyethylenfolie in einer Dicke von 100 µ aufgetragen. In einem Abstand von 10 cm zu der beschichteten Polyethylenfolie sind zwei Quecksilbermitteldrucklampen mit einer Leistung von 80 Watt/cm Leuchtlänge angebracht. Nach zwei Sekunden UV-Belichtung wird ein klebfreier Überzug erhalten.

## Patentansprüche

### Patentansprüche für folgende Vertragsstaaten : AT, BE, CH, DE, FR, GB, IT, LI, NL, SE

1. Organosiliciumverbindungen enthaltend je Molekül mindestens einen Si-gebundenen Rest Y der Formel

$$-(CH_2)_2-R^2-(A-R^3)_z-O-CH=CH-CH_2-R^4 \qquad (I),$$

wobei

A -O-, -S- oder

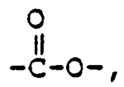

$R^2$ einen linearen oder verzweigten Alkylenrest mit 1 bis 7 Kohlenstoffatom(en) je Rest oder einen Cycloalkylenrest mit 5 bis 7 Kohlenstoffatomen je Rest,
$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,
$R^4$ ein Wasserstoffatom oder einen Alkylrest mit 1 bis 4 Kohlenstoffatom(en) je Rest, und
z 0, 1, oder 2 bedeutet.

2. Organosiliciumverbindungen nach Anspruch 1, dadurch gekennzeichnet, daß es Silane sind.

3. Organosiliciumverbindungen nach Anspruch 1, dadurch gekennzeichnet, daß es Organopolysiloxane sind.

4. Organosiliciumverbindungen nach Anspruch 1, dadurch gekennzeichnet, daß es solche der allgemeinen Formel

$$R_a(R^1O)_bY_cSiO_{\frac{4-(a+b+c)}{2}},$$

sind, wobei

a 0, 1, 2 oder 3, durchschnittlich 0,0 bis 3,0,
b 0, 1, 2 oder 3, durchschnittlich 0,0 bis 3,0 und
c 0 oder 1, durchschnittlich 0,01 bis 1,0 ist und die Summe $a+b+c \leq 4$, durchschnittlich 1,0 bis 4,0 ist,
R gleich oder verschieden sein kann, einen einwertigen, gegebenenfalls substituierten Kohlenwasserstoffrest mit 1 bis 18 Kohlenstoffatom(en) je Rest bedeutet,
$R^1$ gleich oder verschieden sein kann, einen einwertigen, gegebenenfalls durch ein Ethersauerstoffatom unterbrochener Kohlenwasserstoffrest mit 1 bis 8 Kohlenstoffatom(en) je Rest bedeutet, und
Y ein Rest der Formel

$$-(CH_2)_2-R^2-(A-R^3)_z-O-CH=CH-CH_2-R^4 \qquad (I)$$

ist,
wobei

A -O-, -S-, oder

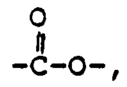

$R^2$ einen linearen oder verzweigten Alkylenrest mit 1 bis 7 Kohlenstoffatom(en) je Rest oder einen Cycloalkylenrest mit 5 bis 7 Kohlenstoffatomen je Rest,
$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,
$R^4$ ein Wasserstoffatom oder einen Alkylrest mit 1 bis 4 Kohlenstoffatom(en) je Rest, und
z 0, 1 oder 2 bedeutet.

**5.** Organosiliciumverbindungen nach Anspruch 1, 2 oder 4, dadurch gekennzeichnet, daß es Silane der Formel

$$R_dYSi(OR^1)_{3-d}$$

sind, wobei

d 0, 1 oder 2 ist,
R gleich oder verschieden sein kann, einen einwertigen, gegebenenfalls substituierten Kohlenwasserstoffrest mit 1 bis 18 Kohlenstoffatom(en) je Rest bedeutet,
$R^1$ gleich oder verschieden sein kann, einen einwertigen, gegebenenfalls durch ein Ethersauerstoffatom unterbrochener Kohlenwasserstoffrest mit 1 bis 8 Kohlenstoffatom(en) je Rest bedeutet, und
Y ein Rest der Formel

$$-(CH_2)_2-R^2-(A-R^3)_z-O-CH=CH-CH_2-R^4 \qquad (I)$$

ist,
wobei
A -O-, -S-, oder

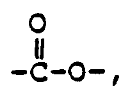

$R^2$ einen linearen oder verzweigten Alkylenrest mit 1 bis 7 Kohlenstoffatom(en) je Rest oder einen Cycloalkylenrest mit 5 bis 7 Kohlenstoffatomen je Rest,
$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,
$R^4$ ein Wasserstoffatom oder einen Alkylrest mit 1 bis 4 Kohlenstoffatom(en) je Rest, und
z 0, 1 oder 2 bedeutet.

**6.** Organosiliciumverbindungen nach Anspruch 1, 3 oder 4, dadurch gekennzeichnet, daß es Organopolysiloxane der Formel

$$Y_cR_{3-c}SiO(SiR_2O)_n(SiRYO)_mSiR_{3-c}Y_c$$

sind, wobei

R gleich oder verschieden sein kann, einen einwertigen, gegebenenfalls substituierten Kohlenwasserstoffrest mit 1 bis 18 Kohlenstoffatom(en) je Rest bedeutet,
c 0 oder 1,
n 0 oder eine ganze Zahl von 1 bis 1000,
m 0 oder eine ganze Zahl von 1 bis 500 und

Y ein Rest der Formel

$$-(CH_2)_2-R^2-(A-R^3)_z-O-CH=CH-CH_2-R^4 \quad (I)$$

ist, mit der Maßgabe, daß mindestens ein Rest Y pro Molekül enthalten ist,
wobei
A -O-, -S-, oder

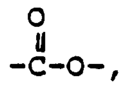

$R^2$ einen linearen oder verzweigten Alkylenrest mit 1 bis 7 Kohlenstoffatom(en) je Rest oder einen Cycloalkylenrest mit 5 bis 7 Kohlenstoffatomen je Rest,
$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,
$R^4$ ein Wasserstoffatom oder einen Alkylrest mit 1 bis 4 Kohlenstoffatom(en) je Rest, und
z 0, 1 oder 2 bedeutet.

**7.** Organosiliciumverbindungen nach einem der Ansprüche 1 bis 6, dadurch gekennzeichnet, daß Y ein Rest der Formel

$$-(CH_2)_3-O-CH=CH-CH_3$$

ist.

**8.** Organosiliciumverbindungen nach einem der Ansprüche 1 bis 6, dadurch gekennzeichnet, daß Y ein Rest der Formel

$$-(CH_2)_3-O-CH_2-CH_2-O-CH=CH-CH_3$$

ist.

**9.** Organosiliciumverbindungen nach einem der Ansprüche 1 bis 6, dadurch gekennzeichnet, daß Y ein Rest der Formel

$$-(CH_2)_3-O-CH=CH-CH_2-CH_3$$

ist.

**10.** Verfahren zur Herstellung von Organosiliciumverbindungen nach einem der Ansprüche 1 bis 9, dadurch gekennzeichnet, daß zunächst
in einer 1. Stufe eine organische Verbindung (1) der Formel

$$H_2C=CH-R^2-(A-R^3)_z-O-CH_2-CH=CH-R^4$$

wobei

A -O-, -S-, oder

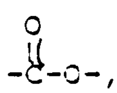

$R^2$ einen linearen oder verzweigten Alkylenrest mit 1 bis 7 Kohlenstoffatom(en) je Rest oder einen Cycloalkylenrest mit 5 bis 7 Kohlenstoffatomen je Rest,

$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,
$R^4$ ein Wasserstoffatom oder einen Alkylrest mit 1 bis 4 Kohlenstoffatom(en) je Rest, und
z 0, 1 oder 2 bedeutet,
an eine Organosiliciumverbindung (2) mit mindestens einem Si-gebundenen Wasserstoffatom in ihrem Molekül in Gegenwart von die Anlagerung von Si-gebundenem Wasserstoff an die aliphatische Doppelbindung förderndem Katalysator (3) angelagert wird,
wobei eine Organosiliciumverbindung mit mindestens einem Si-gebundenen Rest $Y^1$ der Formel

$$-(CH_2)_2-R^2-(A-R^3)_z-O-CH_2-CH=CH-R^4 \quad (II),$$

wobei $R^2$, $R^3$, $R^4$, A und z die oben dafür angegebene Bedeutung haben,
erhalten wird und dann
in einer 2. Stufe die Doppelbindung in dem Rest $Y^1$ zu dem dem Ethersauerstoffatom benachbarten Kohlenstoffatom umgelagert wird durch Erhitzen der in der 1. Stufe gewonnenen Organosiliciumverbindung mit mindestens einem Si-gebundenen Rest $Y^1$ in Gegenwart von eine solche Umlagerung der Doppelbindung förderndem Katalysator (4),
wobei eine Organosiliciumverbindung mit mindestens einem Si-gebundenen Rest Y der Formel

$$-(CH_2)_2-R^2-(A-R^3)_z-O-CH=CH-CH_2-R^4 \quad (I),$$

wobei $R^2$, $R^3$, $R^4$, A und z die oben dafür angegebene Bedeutung haben,
erhalten wird.

**11.** Verfahren nach Anspruch 10, dadurch gekennzeichnet, daß als Organosiliciumverbindung (2) mit mindestens einem Si-gebundenen Wasserstoffatom in ihrem Molekül Silane (2a) der Formel

$$R_dHSiX_{3-d},$$

wobei

R gleich oder verschieden sein kann, einen einwertigen, gegebenenfalls substituierten Kohlenwasserstoffrest mit 1 bis 18 Kohlenwasserstoffatom(en) je Rest bedeutet,
X gleich oder verschieden sein kann, ein Halogenatom oder ein Rest der Formel $-OR^1$ ist,
$R^1$ einen einwertigen, gegebenenfalls durch ein Ethersauerstoffatom unterbrochenen Kohlenwasserstoffrest mit 1 bis 8 Kohlenstoffatom(en) je Rest bedeutet und
d 0, 1 oder 2 ist,
verwendet werden.

**12.** Verfahren nach Anspruch 10, dadurch gekenzeichnet, daß als Organosiliciumverbindung (2) mit mindestens einem Si-gebundenen Wasserstoffatom in ihrem Molekül Organopolysiloxane (2b) der Formel

$$H_cR_{3-c}SiO(SiR_2O)_o(SiRHO)_pSiR_{3-c}H_c,$$

wobei

R gleich oder verschieden sein kann, einen einwertigen, gegebenenfalls substituierten Kohlenwasserstoffrest mit 1 bis 18 Kohlenstoffatom(en) je Rest,
c 0 oder 1,
o 0 oder eine ganze Zahl von 1 bis 1000, und
p 0 oder eine ganze Zahl von 1 bis 500 bedeutet,
verwendet werden.

**13.** Verfahren zur Herstellung von Organosiliciumverbindungen nach Anspruch 3 oder 6, dadurch gekennzeichnet, daß zunächst
in einer 1. Stufe
eine organische Verbindung (1) der Formel

$$H_2C=CH-R^2-(A-R^3)_z-O-CH_2-CH=CH-R^4$$

wobei

A -O-, -S-, oder

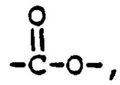

$R^2$ einen linearen oder verzweigten Alkylenrest mit 1 bis 7 Kohlenstoffatom(en) je Rest oder einen Cycloalkylenrest mit 5 bis 7 Kohlenstoffatomen je Rest,
$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,
$R^4$ ein Wasserstoffatom oder einen Alkylrest mit 1 bis 4 Kohlenstoffatom(en) je Rest und
z 0, 1 oder 2 bedeutet,
an ein Silan (2a) mit einem Si-gebunden Wasserstoffatom der Formel

$$R_dHSiX_{3-d} ,$$

wobei
R gleich oder verschieden sein kann, einen einwertigen, gegebenenfalls substituierten Kohlenwasserstoffrest mit 1 bis 18 Kohlenwasserstoffatom(en) je Rest bedeutet,
X gleich oder verschieden sein kann, ein Halogenatom oder ein Rest der Formel $-OR^1$ ist, worin $R^1$ einen einwertigen, gegebenenfalls durch ein Ethersauerstoffatom unterbrochenen Kohlenwasserstoffrest mit 1 bis 8 Kohlenstoffatom(en) je Rest bedeutet und
d 0, 1 oder 2 ist,
in Gegenwart von die Anlagerung von Si-gebundenem Wasserstoff an die aliphatische Doppelbindung förderndem Katalysator (3) angelagert wird,
wobei ein Silan mit einem Si-gebundenen Rest $Y^1$ der Formel

$$-(CH_2)_2-R^2-(A-R^3)_z-O-CH_2-CH=CH-R^4 \qquad (II) ,$$

worin $R^2$, $R^3$, $R^4$, A und z die oben dafür angegebene Bedeutung haben,
erhalten wird,
aus dem anschließend durch Mischhydrolyse mit Chlor- oder Alkoxysilanen und/oder durch Kondensation mit kondensationsfähigen Organopolysiloxanen in an sich bekannter Weise
ein Organopolysiloxan mit mindestens einem Si-gebundenen Rest $Y^1$ der Formel

$$-(CH_2)_2-R^2-(A-R^3)_z-O-CH_2-CH=CH-R^4 \qquad (II) ,$$

wobei $R^2$, $R^3$, $R^4$, A und z die oben dafür angegebene Bedeutung haben,
erhalten wird und dann
in einer 2. Stufe
die Doppelbindung in der Gruppe $Y^1$ des Organopolysiloxans zu dem dem Ethersauerstoffatom benachbarten Kohlenstoffatom umgelagert wird,
durch Erhitzen des in der 1. Stufe gewonnenen Organopolysiloxans mit mindestens einem Rest $Y^1$ in Gegenwart von eine solche Umlagerung der Doppelbindung förderndem Katalysator (4),
wobei ein Organopolysiloxan mit mindestens einer Si-gebundenen Gruppe Y der Formel

$$-(CH_2)_2-R^2-(A-R^3)_z-O-CH=CH-CH_2-R^4 \qquad (I) ,$$

wobei $R^2$, $R^3$, $R^4$, A und z die oben dafür angegebene Bedeutung haben,
erhalten wird.

**14.** Verwendung der Organopolysiloxane nach Anspruch 3 oder 6 in durch Licht vernetzbare Zusammensetzungen auf Grundlage von vorstehend genannten Organopolysiloxanen.

**15.** Verwendung der Organopolysiloxane nach Anspruch 3 oder 6 zur Herstellung von durch Licht vernetzbare Überzüge.

**16.** Organosiliciumverbindungen enthaltend je Molekül mindestens einen Si-gebundenen Rest $Y^1$ der Formel

$$-(CH_2)_2-R^2-(A-R^3)_z-O-CH_2-CH=CH-R^4 \quad (II),$$

wobei

A -O-, -S- oder

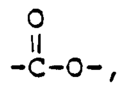

$R^2$ einen linearen oder verzweigten Alkylenrest mit 1 bis 7 Kohlenstoffatom(en) je Rest oder einen Cycloalkylenrest mit 5 bis 7 Kohlenstoffatomen je Rest,
$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,
$R^4$ ein Wasserstoffatom oder einen Alkylrest mit 1 bis 4 Kohlenstoffatom(en) je Rest, und
z 0, 1, oder 2 bedeutet.

**17.** Organosiliciumverbindungen nach Anspruch 16, dadurch gekennzeichnet, daß es Organopolysiloxane sind.

**18.** Verfahren zur Herstellung von Organosiliciumverbindungen nach Anspruch 16 oder 17, dadurch gekennzeichnet, daß eine organische Verbindung (1) der Formel

$$H_2C=CH-R^2-(A-R^3)_z-O-CH_2-CH=CH-R^4$$

wobei

A -O-, -S-, oder

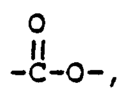

$R^2$ einen linearen oder verzweigten Alkylenrest mit 1 bis 7 Kohlenstoffatom(en) je Rest oder einen Cycloalkylenrest mit 5 bis 7 Kohlenstoffatomen je Rest,
$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,
$R^4$ ein Wasserstoffatom oder einen Alkylrest mit 1 bis 4 Kohlenstoffatom(en) je Rest, und
z 0, 1 oder 2 bedeutet,
an eine Organosiliciumverbindung (2) mit mindestens einem Si-gebundenen Wasserstoffatom in ihrem Molekül in Gegenwart von die Anlagerung von Si-gebundenem Wasserstoff an die aliphatische Doppelbindung förderndem Katalysator (3) angelagert wird,
wobei eine Organosiliciumverbindung mit mindestens einem Si-gebundenen Rest $Y^1$ der Formel

$$-(CH_2)_2-R^2-(A-R^3)_z-O-CH_2-CH=CH-R^4 \quad (II),$$

wobei $R^2$, $R^3$, $R^4$, A und z die oben dafür angegebene Bedeutung haben,
erhalten wird.

**19.** Verfahren nach Anspruch 18, dadurch gekenn zeichnet, daß als Organosiliciumverbindung (2) mit mindestens einem Si-gebundenen Wasserstoffatom in ihrem Molekül Organopolysiloxane (2b) der Formel

$$H_cR_{3-c}SiO(SiR_2O)_o(SiRHO)_pSiR_{3-c}H_c,$$

wobei

R gleich oder verschieden sein kann, einen einwertigen, gegebenenfalls substituierten Kohlenwasserstoffrest mit 1 bis 18 Kohlenstoffatom(en) je Rest,
c 0 oder 1,
o 0 oder eine ganze Zahl von 1 bis 1000, und
p 0 oder eine ganze Zahl von 1 bis 500 bedeutet,
verwendet werden.

**20.** Verfahren zur Herstellung von Organosiliciumverbindungen nach Anspruch 16 oder 17, dadurch gekennzeichnet, daß eine organische Verbindung (1) der Formel

$$H_2C{=}CH{-}R^2{-}(A{-}R^3)_z{-}O{-}CH_2{-}CH{=}CH{-}R^4$$

wobei

A -O-, -S-, oder

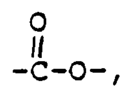

$R^2$ einen linearen oder verzweigten Alkylenrest mit 1 bis 7 Kohlenstoffatom(en) je Rest oder einen Cycloalkylenrest mit 5 bis 7 Kohlenstoffatomen je Rest,
$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,
$R^4$ ein Wasserstoffatom oder einen Alkylrest mit 1 bis 4 Kohlenstoffatom(en) je Rest, und
z 0, 1 oder 2 bedeutet,
an ein Silan (2a) mit einem Si-gebunden Wasserstoffatom der Formel

$$R_dHSiX_{3-d}\ ,$$

wobei
R gleich oder verschieden sein kann, einen einwertigen, gegebenenfalls substituierten Kohlenwasserstoffrest mit 1 bis 18 Kohlenwasserstoffatom(en) je Rest bedeutet,
X gleich oder verschieden sein kann, ein Halogenatom oder ein Rest der Formel $-OR^1$ ist, worin
$R^1$ einen einwertigen, gegebenenfalls durch ein Ethersauerstoffatom unterbrochenen Kohlenwasserstoffrest mit 1 bis 8 Kohlenstoffatom(en) je Rest bedeutet und
d 0, 1 oder 2 ist,
in Gegenwart von die Anlagerung von Si-gebundenem Wasserstoff an die aliphatische Doppelbindung förderndem Katalysator (3) angelagert wird,
wobei ein Silan mit einem Si-gebundenen Rest $Y^1$ der Formel

$$-(CH_2)_2{-}R^2{-}(A{-}R^3)_z{-}O{-}CH_2{-}CH{=}CH{-}R^4 \qquad (II)\ ,$$

worin $R^2$, $R^3$, $R^4$, A und z die oben dafür angegebene Bedeutung haben,
erhalten wird,
aus dem anschließend durch Mischhydrolyse mit Chlor-oder Alkoxysilanen und/oder durch Kondensation mit kondensationsfähigen Organopolysiloxanen in an sich bekannter Weise
ein Organopolysiloxan mit mindestens einem Si-gebundenen Rest $Y^1$ der Formel

$$-(CH_2)_2{-}R^2{-}(A{-}R^3)_z{-}O{-}CH_2{-}CH{=}CH{-}R^4 \qquad (II)\ ,$$

wobei $R^2$, $R^3$, $R^4$, A und z die oben dafür angegebene Bedeutung haben,
erhalten wird.

**Patentansprüche für folgenden Vertragsstaat: ES**

1. Verfahren zur Herstellung von Organosiliciumverbindungen enthaltend je Molekül mindestens einen Si-gebundenen Rest Y der Formel

$$-(CH_2)_2-R^2-(A-R^3)_z-O-CH=CH-CH_2-R^4 \qquad (I),$$

wobei

A -O-, -S- oder

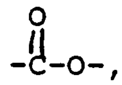

$R^2$ einen linearen oder verzweigten Alkylenrest mit 1 bis 7 Kohlenstoffatom(en) je Rest oder einen Cycloalkylenrest mit 5 bis 7 Kohlenstoffatomen je Rest,
$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,
$R^4$ ein Wasserstoffatom oder einen Alkylrest mit 1 bis 4 Kohlenstoffatom(en) je Rest, und
z 0, 1, oder 2 bedeutet,
wobei zunächst
in einer 1. Stufe
eine organische Verbindung (1) der Formel

$$H_2C=CH-R^2-(A-R^3)_z-O-CH_2-CH=CH-R^4$$

wobei $R^2$, $R^3$, $R^4$, A und z die oben dafür angegebene Bedeutung haben, an eine Organosiliciumverbindung (2) mit mindestens einem Si-gebundenen Wasserstoffatom in ihrem Molekül in Gegenwart von die Anlagerung von Si-gebundenem Wasserstoff an die aliphatische Doppelbindung förderndem Katalysator (3) angelagert wird,
wobei eine Organosiliciumverbindung mit mindestens einem Si-gebundenen Rest $Y^1$ der Formel

$$-(CH_2)_2-R^2-(A-R^3)_z-O-CH_2-CH=CH-R^4 \qquad (II),$$

wobei $R^2$, $R^3$, $R^4$, A und z die oben dafür angegebene Bedeutung haben,
erhalten wird und dann
in einer 2. Stufe
die Doppelbindung in dem Rest $Y^1$ zu dem dem Ethersauerstoffatom benachbarten Kohlenstoffatom umgelagert wird durch Erhitzen der in der 1. Stufe gewonnenen Organosiliciumverbindung mit mindestens einem Si-gebundenen Rest $Y^1$ in Gegenwart von eine solche Umlagerung der Doppelbindung förderndem Katalysator (4),
wobei eine Organosiliciumverbindung mit mindestens einem Si-gebundenen Rest Y der Formel

$$-(CH_2)_2-R^2-(A-R^3)_z-O-CH=CH-CH_2-R^4 \qquad (I),$$

wobei $R^2$, $R^3$, $R^4$, A und z die oben dafür angegebene Bedeutung haben,
erhalten wird.

2. Verfahren gemäß Anspruch 1, dadurch gekennzeichnet, daß als Organosiliciumverbindung (2) mit mindestens einem Si-gebundenen Wasserstoffatom in ihrem Molekül Silane (2a) der Formel

$$R_dHSiX_{3-d},$$

wobei

R gleich oder verschieden sein kann, einen einwertigen, gegebenenfalls substituierten Kohlenwasserstoffrest mit 1 bis 18 Kohlenwasserstoffatom(en) je Rest bedeutet,
X gleich oder verschieden sein kann, ein Halogenatom oder ein Rest der Formel $-OR^1$ ist, worin
$R^1$ einen einwertigen, gegebenenfalls durch ein Ethersauerstoffatom unterbrochenen Kohlenwasserstoffrest mit 1 bis 8 Kohlenstoffatom(en) je Rest bedeutet und
d 0, 1 oder 2 ist,
verwendet werden.

3. Verfahren gemäß Anspruch 1, dadurch gekenzeichnet, daß als Organosiliciumverbindung (2) mit mindestens einem Si-gebundenen Wasserstoffatom in ihrem Molekül Organopolysiloxane (2b) der Formel

$$H_cR_{3-c}SiO(SiR_2O)_o(SiRHO)_pSiR_{3-c}H_c ,$$

wobei

R gleich oder verschieden sein kann, einen einwertigen, gegebenenfalls substituierten Kohlenwasserstoffrest mit 1 bis 18 Kohlenstoffatom(en) je Rest,
c 0 oder 1,
o 0 oder eine ganze Zahl von 1 bis 1000, und
p 0 oder eine ganze Zahl von 1 bis 500 bedeutet,
verwendet werden.

4. Verfahren zur Herstellung von Organosiliciumverbindungen enthaltend je Molekül mindestens einen Si-gebundenen Rest Y der Formel

$$-(CH_2)_2-R^2-(A-R^3)_z-O-CH=CH-CH_2-R^4 \quad (I),$$

wobei

A -O-, -S- oder

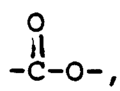

$R^2$ einen linearen oder verzweigten Alkylenrest mit 1 bis 7 Kohlenstoffatom(en) je Rest oder einen Cycloalkylenrest mit 5 bis 7 Kohlenstoffatomen je Rest,
$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,
$R^4$ ein Wasserstoffatom oder einen Alkylrest mit 1 bis 4 Kohlenstoffatom(en) je Rest, und
z 0, 1, oder 2 bedeutet,
wobei zunächst
in einer 1. Stufe
eine organische Verbindung (1) der Formel

$$H_2C=CH-R^2-(A-R^3)_z-O-CH_2-CH=CH-R^4$$

wobei $R^2$, $R^3$, $R^4$, A und z die oben dafür angegebene Bedeutung hat, an ein Silan (2a) mit einem Si-gebundenen Wasserstoffatom der Formel

$$R_dHSiX_{3-d} ,$$

wobei
R gleich oder verschieden sein kann, einen einwertigen, gegebenenfalls substituierten Kohlenwasserstoffrest mit 1 bis 18 Kohlenwasserstoffatom(en) je Rest bedeutet,
X gleich oder verschieden sein kann, ein Halogenatom oder ein Rest der Formel $-OR^1$ ist, worin

$R^1$ einen einwertigen, gegebenenfalls durch ein Ethersauerstoffatom unterbrochenen Kohlenwasserstoffrest mit 1 bis 8 Kohlenstoffatom(en) je Rest bedeutet und

d 0, 1 oder 2 ist,

in Gegenwart von die Anlagerung von Si-gebundenem Wasserstoff an die aliphatische Doppelbindung förderndem Katalysator (3) angelagert wird,

wobei ein Silan mit einem Si-gebundenen Rest $Y^1$ der Formel

$$-(CH_2)_2-R^2-(A-R^3)_z-O-CH_2-CH=CH-R^4 \quad (II),$$

worin $R^2$, $R^3$, $R^4$, A und z die oben dafür angegebene Bedeutung haben,

erhalten wird,

aus dem anschließend durch Mischhydrolyse mit Chlor-oder Alkoxysilanen und/oder durch Kondensation mit kondensationsfähigen Organopolysiloxanen in an sich bekannter Weise

ein Organopolysiloxan mit mindestens einem Si-gebundenen Rest $Y^1$ der Formel

$$-(CH_2)_2-R^2-(A-R^3)_z-O-CH_2-CH=CH-R^4 \quad (II),$$

wobei $R^2$, $R^3$, $R^4$, A und z die oben dafür angegebene Bedeutung haben,

erhalten wird und dann

in einer 2. Stufe

die Doppelbindung in der Gruppe $Y^1$ des Organopolysiloxans zu dem dem Ethersauerstoffatom benachbarten Kohlenstoffatom umgelagert wird,

durch Erhitzen des in der 1. Stufe gewonnenen Organopolysiloxans mit mindestens einem Rest $Y^1$ in Gegenwart von eine solche Umlagerung der Doppelbindung förderndem Katalysator (4),

wobei ein Organopolysiloxan mit mindestens einer Si-gebundenen Gruppe Y der Formel

$$-(CH_2)_2-R^2-(A-R^3)_z-O-CH=CH-CH_2-R^4 \quad (I),$$

wobei $R^2$, $R^3$, $R^4$, A und z die oben dafür angegebene Bedeutung haben,

erhalten wird.

**5.** Verwendung von Organopolysiloxanen enthaltend je Molekül mindestens einen Si-gebundenen Rest Y der Formel

$$-(CH_2)_2-R^2-(A-R^3)_z-O-CH=CH-CH_2-R^4 \quad (I),$$

wobei

A -O-, -S- oder

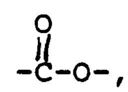

$R^2$ einen linearen oder verzweigten Alkylenrest mit 1 bis 7 Kohlenstoffatom(en) je Rest oder einen Cycloalkylenrest mit 5 bis 7 Kohlenstoffatomen je Rest,

$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,

$R^4$ ein Wasserstoffatom oder einen Alkylrest mit 1 bis 4 Kohlenstoffatom(en) je Rest, und

z 0, 1, oder 2 bedeutet, in durch Licht vernetzbare Zusammensetzungen auf Grundlage von vorstehend genannten Organopolysiloxanen.

**6.** Verwendung von Organopolysiloxanen enthaltend je Molekul mindestens einen Si-gebundenen Rest Y der Formel

$$-(CH_2)_2-R^2-(A-R^3)_z-O-CH=CH-CH_2-R^4 \quad (I),$$

wobei

A -O-, -S- oder

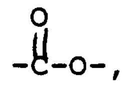

$R^2$ einen linearen oder verzweigten Alkylenrest mit 1 bis 7 Kohlenstoffatom(en) je Rest oder einen Cycloalkylenrest mit 5 bis 7 Kohlenstoffatomen je Rest,
$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,
$R^4$ ein Wasserstoffatom oder einen Alkylrest mit 1 bis 4 Kohlenstoffatom(en) je Rest, und
z 0, 1, oder 2 bedeutet,
zur Herstellung von durch Licht vernetzbare Überzüge.

**7.** Verwendung nach Anspruch 5 oder 6, wobei die Organopolysiloxane solche der allgemeinen Formel

$$R_a(R^1O)_bY_cSiO_{\frac{4-(a+b+c)}{2}} ,$$

sind, wobei

a 0, 1, 2 oder 3, durchschnittlich 0,0 bis 3,0,
b 0, 1, 2 oder 3, durchschnittlich 0,0 bis 3,0 und
c 0 oder 1, durchschnittlich 0,01 bis 1,0 ist und die Summe $a+b+c \leq 4$, durchschnittlich 1,0 bis 4,0 ist,
R gleich oder verschieden sein kann, einen einwertigen, gegebenenfalls substituierten Kohlenwasserstoffrest mit 1 bis 18 Kohlenstoffatom(en) je Rest bedeutet,
$R^1$ gleich oder verschieden sein kann, einen einwertigen, gegebenenfalls durch ein Ethersauerstoffatom unterbrochener Kohlenwasserstoffrest mit 1 bis 8 Kohlenstoffatom(en) je Rest bedeutet, und
Y ein Rest der Formel

$$-(CH_2)_2-R^2-(A-R^3)_z-O-CH=CH-CH_2-R^4 \qquad (I)$$

ist,
wobei
A -O-, -S-, oder

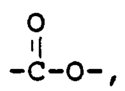

$R^2$ einen linearen oder verzweigten Alkylenrest mit 1 bis 7 Kohlenstoffatom(en) je Rest oder einen Cycloalkylenrest mit 5 bis 7 Kohlenstoffatomen je Rest,
$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,
$R^4$ ein Wasserstoffatom oder einen Alkylrest mit 1 bis 4 Kohlenstoffatom(en) je Rest, und
z 0, 1 oder 2 bedeutet.

**8.** Verwendung nach Anspruch 5 oder 6, wobei die Organopolysiloxane solche der allgemeinen Formel

$$Y_cR_{3-c}SiO(SiR_2O)_n(SiRYO)_mSiR_{3-c}Y_c$$

sind, wobei

R gleich oder verschieden sein kann, einen einwertigen, gegebenenfalls substituierten Kohlenwasserstoffrest mit 1 bis 18 Kohlenstoffatom(en) je Rest bedeutet,
c 0 oder 1,
n 0 oder eine ganze Zahl von 1 bis 1000,
m 0 oder eine ganze Zahl von 1 bis 500 und
Y ein Rest der Formel

$$-(CH_2)_2-R^2-(A-R^3)_z-O-CH=CH-CH_2-R^4 \qquad (I)$$

ist, mit der Maßgabe, daß mindestens ein Rest Y pro Molekül enthalten ist,
wobei
A -O-, -S-, oder

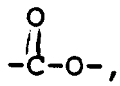

$R^2$ einen linearen oder verzweigten Alkylenrest mit 1 bis 7 Kohlenstoffatom(en) je Rest oder einen Cycloalkylenrest mit 5 bis 7 Kohlenstoffatomen je Rest,
$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,
$R^4$ ein Wasserstoffatom oder einen Alkylrest mit 1 bis 4 Kohlenstoffatom(en) je Rest, und
z 0, 1 oder 2 bedeutet.

**9.** Verwendung nach einem der Ansprüche 5 bis 8, wobei Y ein Rest der Formel

$$-(CH_2)_3-O-CH=CH-CH_3,$$

$$-(CH_2)_3-O-CH_2-CH_2-O-CH=CH-CH_3 \text{ oder}$$

$$-(CH_2)_3-O-CH=CH-CH_2-CH_3$$

ist.

**10.** Verfahren zur Herstellung von Organosiliciumverbindungen enthaltend je Molekül mindestens einen Si-gebundenen Rest $Y^1$ der Formel

$$-(CH_2)_2-R^2-(A-R^3)_z-O-CH_2-CH=CH-R^4 \qquad (II),$$

wobei

A -O-, -S- oder

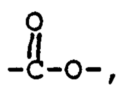

$R^2$ einen linearen oder verzweigten Alkylenrest mit 1 bis 7 Kohlenstoffatom(en) je Rest oder einen Cyclo-Alkylenrest mit 5 bis 7 Kohlenstoffatomen je Rest,
$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,
$R^4$ ein Wasserstoffatom oder einen Alkylrest mit 1 bis 4 Kohlenstoffatom (en) je Rest, und
z 0, 1, oder 2 bedeutet,
wobei eine organische Verbindung (1) der Formel

$$H_2C=CH-R^2-(A-R^3)_z-O-CH_2-CH=CH-R^4$$

wobei $R^2$, $R^3$, $R^4$, A und z die oben dafür angegebene Bedeutung haben, an eine Organosiliciumverbindung (2) mit mindestens einem Si-gebundenen Wasserstoffatom in ihrem Molekül in Gegenwart von die Anlagerung von Si-gebundenem Wasserstoff an die aliphatische Doppelbindung förderndem Katalysator (3) angelagert wird, wobei eine Organosiliciumverbindung mit mindestens einem Si-gebundenen Rest $Y^1$ der Formel

$$-(CH_2)_2-R^2-(A-R^3)_z-O-CH_2-CH=CH-R^4 \quad (II),$$

wobei $R^2$, $R^3$, $R^4$, A und z die oben dafür angegebene Bedeutung haben, erhalten wird.

**11.** Verfahren nach Anspruch 10, dadurch gekennzeichnet, daß als Organosiliciumverbindung (2) mit mindestens einem Si-gebundenen Wasserstoffatom in ihrem Molekül Organopolysiloxane (2b) der Formel

$$H_cR_{3-c}SiO(SiR_2O)_o(SiRHO)_pSiR_{3-c}H_c,$$

wobei

R gleich oder verschieden sein kann, einen einwertigen, gegebenenfalls substituierten Kohlenwasserstoffrest mit 1 bis 18 Kohlenstoffatom(en) je Rest,
c 0 oder 1,
o 0 oder eine ganze Zahl von 1 bis 1000, und
p 0 oder eine ganze Zahl von 1 bis 500 bedeutet,
verwendet werden.

**12.** Verfahren zur Herstellung von Organosiliciumverbindungen enthaltend je Molekül mindestens einen Si-gebundenen Rest $Y^1$ der Formel

$$-(CH_2)_2-R^2-(A-R^3)_z-O-CH_2-CH=CH-R^4 \quad (II),$$

wobei

A -O-, -S- oder

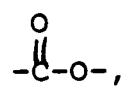

$R^2$ einen linearen oder verzweigten Alkylenrest mit 1 bis 7 Kohlenstoffatom(en) je Rest oder einen Cyclo-Alkylenrest mit 5 bis 7 Kohlenstoffatomen je Rest,
$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,
$R^4$ ein Wasserstoffatom oder einen Alkylrest mit 1 bis 4 Kohlenstoffatom (en) je Rest, und
z 0, 1, oder 2 bedeutet,
wobei eine organische Verbindung (1) der Formel

$$H_2C=CH-R^2-(A-R^3)_z-O-CH_2-CH=CH-R^4$$

wobei
A -O-, -S-, oder

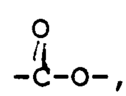

$R^2$ einen linearen oder verzweigten Alkylenrest mit 1 bis7 Kohlenstoffatom(en) je Rest oder einen Cycloalkylenrest mit 5 bis 7 Kohlenstoffatomen je Rest,
$R^3$ einen linearen oder verzweigten Alkylenrest mit 2 bis 4 Kohlenstoffatomen je Rest, der durch eine Hydroxylgruppe, Methoxygruppe, Ethoxygruppe oder Trimethylsiloxygruppe substituiert sein kann,
$R^4$ ein Wasserstoffatom oder einen Alkylrest mit 1 bis 4 Kohlenstoffatom(en) je Rest, und
z 0, 1 oder 2 bedeutet,
an ein Silan (2a) mit einem Si-gebundenen Wasserstoffatom der Formel

$$R_dHSiX_{3-d},$$

wobei
R gleich oder verschieden sein kann, einen einwertigen, gegebenenfalls substituierten Kohlenwasserstoffrest mit 1 bis 18 Kohlenwasserstoffatom(en) je Rest bedeutet,
X gleich oder verschieden sein kann, ein Halogenatom oder ein Rest der Formel $-OR^1$ ist, worin $R^1$ einen einwertigen, gegebenenfalls durch ein Ethersauerstoffatom unterbrochenen Kohlenwasserstoffrest mit 1 bis 8 Kohlenstoffatom(en) je Rest bedeutet und
d 0, 1 oder 2 ist,
in Gegenwart von die Anlagerung von Si-gebundenem Wasserstoff an die aliphatische Doppelbindung förderndem Katalysator (3) angelagert wird,
wobei ein Silan mit einem Si-gebundenen Rest $Y^1$ der Formel

$$-(CH_2)_2-R^2-(A-R^3)_z-O-CH_2-CH=CH-R^4 \qquad (II),$$

worin $R^2$, $R^3$, $R^4$, A und z die oben dafür angegebene Bedeutung haben,
erhalten wird,
aus dem anschließend durch Mischhydrolyse mit Chlor- oder Alkoxysilanen und/oder durch Kondensation mit kondensationsfähigen Organopolysiloxanen in an sich bekannter Weise
ein Organopolysiloxan mit mindestens einem Si-gebundenen Rest $Y^1$ der Formel

$$-(CH_2)_2-R^2-(A-R^3)_z-O-CH_2-CH=CH-R^4 \qquad (II),$$

wobei $R^2$, $R^3$, $R^4$, A und z die oben dafür angegebene Bedeutung haben,
erhalten wird.

## Claims

**Claims for the following Contracting States : AT, BE, CH, DE, FR, GB, IT, LI, NL, SE**

1. Organosilicon compounds containing, per molecule, at least one Si-bonded radical Y of the formula

$$-(CH_2)_2-R^2-(A-R^3)_z-O-CH=CH-CH_2-R^4 \qquad (I),$$

in which
A denotes -O-, -S- or

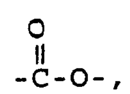

$R^2$ denotes a linear or branched alkylene radical having 1 to 7 carbon atom(s) per radical or denotes a cycloalkylene radical having 5 to 7 carbon atoms per radical,
$R^3$ denotes a linear or branched alkylene radical having 2 to 4 carbon atoms per radical, which may be substituted by a hydroxyl group, methoxy group, ethoxy group or trimethylsiloxy group,
$R^4$ denotes a hydrogen atom or an alkyl radical having 1 to 4 carbon atom(s) per radical and
z denotes 0, 1, or 2.

**2.** Organosilicon compounds according to Claim 1, characterized in that they are silanes.

**3.** Organosilicon compounds according to Claim 1, characterized in that they are organopolysiloxanes.

**4.** Organosilicon compounds according to Claim 1, characterized in that they have the general formula

$$R_a(R^1O)_bY_cSiO_{\frac{4-(a+b+c)}{2}} ,$$

in which

a is 0, 1, 2 or 3, on average 0.0 to 3.0,
b is 0, 1, 2 or 3, on average 0.0 to 3.0 and
c is 0 or 1, on average 0.01 to 1.0 and the sum a+b+c is $\leq$ 4, and on average is 1.0 to 4.0,
R may be identical or different, and denotes a monovalent, substituted or unsubstituted hydrocarbon radical having 1 to 18 carbon atom(s) per radical,
$R^1$ may be identical or different, and denotes a monovalent hydrocarbon radical having 1 to 8 carbon atom(s) per radical which may be interrupted by an ether oxygen atom, and
Y is a radical of the formula

$$-(CH_2)_2-R^2-(A-R^3)_z-O-CH=CH-CH_2-R^4 \qquad (I)$$

in which
A denotes -O-, -S- or

$$-\overset{O}{\overset{\|}{C}}-O- ,$$

$R^2$ denotes a linear or branched alkylene radical having 1 to 7 carbon atom(s) per radical or denotes a cycloalkylene radical having 5 to 7 carbon atoms per radical,
$R^3$ denotes a linear or branched alkylene radical having 2 to 4 carbon atoms per radical, which may be substituted by a hydroxyl group, methoxy group, ethoxy group or trimethylsiloxy group,
$R^4$ denotes a hydrogen atom or an alkyl radical having 1 to 4 carbon atom(s) per radical and
z denotes 0, 1, or 2.

**5.** Organosilicon compounds according to Claim 1, 2 or 4, characterized in that they are silanes of the formula

$$R_dYSi(OR^1)_{3-d}$$

in which

d is 0, 1 or 2,
R may be identical or different, and denotes a monovalent, substituted or unsubstituted hydrocarbon radical having 1 to 18 carbon atom(s) per radical,
$R^1$ may be identical or different, and denotes a monovalent hydrocarbon radical having 1 to 8 carbon atom(s) per radical which may be interrupted by an ether oxygen atom, and
Y is a radical of the formula

$$-(CH_2)_2-R^2-(A-R^3)_z-O-CH=CH-CH_2-R^4 \qquad (I)$$

in which

A denotes -O-, -S- or

$$-\overset{\displaystyle O}{\overset{\|}{C}}-O-,$$

$R^2$ denotes a linear or branched alkylene radical having 1 to 7 carbon atom(s) per radical or denotes a cycloalkylene radical having 5 to 7 carbon atoms per radical,
$R^3$ denotes a linear or branched alkylene radical having 2 to 4 carbon atoms per radical, which may be substituted by a hydroxyl group, methoxy group, ethoxy group or trimethylsiloxy group,
$R^4$ denotes a hydrogen atom or an alkyl radical having 1 to 4 carbon atom(s) per radical and
z denotes 0, 1, or 2.

**6.** Organosilicon compounds according to Claim 1, 3 or 4, characterized in that they are organopolysiloxanes of the formula

$$Y_cR_{3-c}SiO(SiR_2O)_n(SiRYO)_mSiR_{3-c}Y_c$$

in which

R may be identical or different, and denotes a monovalent, substituted or unsubstituted hydrocarbon radical having 1 to 18 carbon atom(s) per radical,
c is 0 or 1,
n is 0 or an integer from 1 to 1000,
m is 0 or an integer from 1 to 500 and
Y is a radical of the formula

$$-(CH_2)_2-R^2-(A-R^3)_z-O-CH=CH-CH_2-R^4 \qquad (I)$$

with the proviso that at least one radical Y is present per molecule, and in which
A denotes -O-, -S- or

$$-\overset{\displaystyle O}{\overset{\|}{C}}-O-,$$

$R^2$ denotes a linear or branched alkylene radical having 1 to 7 carbon atom(s) per radical or denotes a cycloalkylene radical having 5 to 7 carbon atoms per radical,
$R^3$ denotes a linear or branched alkylene radical having 2 to 4 carbon atoms per radical, which may be substituted by a hydroxyl group, methoxy group, ethoxy group or trimethylsiloxy group,
$R^4$ denotes a hydrogen atom or an alkyl radical having 1 to 4 carbon atom(s) per radical and
z denotes 0, 1, or 2.

**7.** Organosilicon compounds according to one of Claims 1 to 6, characterized in that Y is a radical of the formula

$$-(CH_2)_3-O-CH=CH-CH_3$$

**8.** Organosilicon compounds according to one of Claims 1 to 6, characterized in that Y is a radical of the formula

$$-(CH_2)_3-O-CH_2-CH_2-O-CH=CH-CH_3$$

**9.** Organosilicon compounds according to one of Claims 1 to 6, characterized in that Y is a radical of the formula

$$-(CH_2)_3-O-CH=CH-CH_2-CH_3$$

**10.** Process for the preparation of organosilicon compounds according to one of Claims 1 to 9, characterized in that initially in a 1st step an organic compound (1) of the formula

$$H_2C{=}CH{-}R^2{-}(A{-}R^3)_z{-}O{-}CH_2{-}CH{=}CH{-}R^4$$

in which

A denotes -O-, -S- or

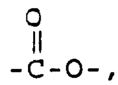

$R^2$ denotes a linear or branched alkylene radical having 1 to 7 carbon atom(s) per radical or denotes a cycloalkylene radical having 5 to 7 carbon atoms per radical,
$R^3$ denotes a linear or branched alkylene radical having 2 to 4 carbon atoms per radical, which may be substituted by a hydroxyl group, methoxy group, ethoxy group or trimethylsiloxy group,
$R^4$ denotes a hydrogen atom or an alkyl radical having 1 to 4 carbon atom(s) per radical and
z denotes 0, 1, or 2,
is subjected to an addition reaction with an organosilicon compound (2) having at least one Si-bonded hydrogen atom in its molecule in the presence of a catalyst (3) promoting the addition of Si-bonded hydrogen to the aliphatic double bond,
an organosilicon compound having at least one Si-bonded radical $Y^1$ of the formula

$$-(CH_2)_2{-}R^2{-}(A{-}R^3)_z{-}O{-}CH_2{-}CH{=}CH{-}R^4 \qquad (II),$$

in which $R^2$, $R^3$, $R^4$, A and z have the meaning given above,
being obtained, and then in a 2nd step
the double bond in the radical $Y^1$ is shifted to the carbon atom adjacent to the ether oxygen atom by heating the organosilicon compound having at least one Si-bonded radical $Y^1$, obtained in the 1st step, in the presence of a catalyst (4) promoting this kind of rearrangement of the double bond,
an organosilicon compound having at least one Si-bonded radical Y of the formula

$$-(CH_2)_2{-}R^2{-}(A{-}R^3)_z{-}O{-}CH{=}CH{-}CH_2{-}R^4 \qquad (I),$$

in which $R^2$, $R^3$, $R^4$, A and z have the meaning given above, being obtained.

**11.** Process according to Claim 10, characterized in that the organosilicon compound (2) having at least one Si-bonded hydrogen atom in its molecule which is used is a silane (2a) of the formula

$$R_dHSiX_{3-d} ,$$

in which

R may be identical or different, and denotes a monovalent, substituted or unsubstituted hydrocarbon radical having 1 to 18 hydrocarbon atom(s) per radical,
X may be identical or different, and is a halogen atom or a radical of the formula $-OR^1$,
in which $R^1$ denotes a monovalent hydrocarbon radical having 1 to 8 carbon atom(s) per radical which may be interrupted by an ether oxygen atom and
d is 0, 1 or 2.

**12.** Process according to Claim 10, characterized in that the organosilicon compound (2) having at least one Si-bonded hydrogen atom in its molecule which is used is an organopolysiloxane (2b) of the formula

$$H_cR_{3-c}SiO(SiR_2O)_o(SiRHO)_pSiR_{3-c}H_c ,$$

in which

R may be identical or different and denotes a monovalent, substituted or unsubstituted hydrocarbon radical having 1 to 18 carbon atom(s) per radical,
c denotes 0 or 1,
o denotes 0 or an integer from 1 to 1000, and
p denotes 0 or an integer from 1 to 500.

13. Process for the preparation of organosilicon compounds according to Claim 3 or 6, characterized in that initially in a 1st step an organic compound (1) of the formula

$$H_2C{=}CH\text{-}R^2\text{-}(A\text{-}R^3)_z\text{-}O\text{-}CH_2\text{-}CH{=}CH\text{-}R^4$$

in which

A denotes -O-, -S- or

$$\overset{\displaystyle O}{\overset{\|}{-C}}\text{-}O\text{-},$$

$R^2$ denotes a linear or branched alkylene radical having 1 to 7 carbon atom(s) per radical or denotes a cycloalkylene radical having 5 to 7 carbon atoms per radical,
$R^3$ denotes a linear or branched alkylene radical having 2 to 4 carbon atoms per radical, which may be substituted by a hydroxyl group, methoxy group, ethoxy group or trimethylsiloxy group,
$R^4$ denotes a hydrogen atom or an alkyl radical having 1 to 4 carbon atom(s) per radical and
z denotes 0, 1, or 2,
is subjected to an addition reaction with a silane (2a) having an Si-bonded hydrogen atom of the formula

$$R_dHSiX_{3-d},$$

in which
R may be identical or different, and denotes a monovalent, substituted or unsubstituted hydrocarbon radical having 1 to 18 hydrocarbon atom(s) per radical,
X may be identical or different, and is a halogen atom or a radical of the formula $-OR^1$,
in which $R^1$ denotes a monovalent hydrocarbon radical having 1 to 8 carbon atom(s) per radical which may be interrupted by an ether oxygen atom and
d is 0, 1 or 2,
in the presence of a catalyst (3) promoting the addition of Si-bonded hydrogen to the aliphatic double bond, a silane having an Si-bonded radical $Y^1$ of the formula

$$-(CH_2)_2\text{-}R^2\text{-}(A\text{-}R^3)_z\text{-}O\text{-}CH_2\text{-}CH{=}CH\text{-}R^4 \qquad \text{(II)},$$

in which $R^2$, $R^3$, $R^4$, A and z have the meaning given above, being obtained
from which mixed hydrolysis with chloro- or alkoxysilanes and/or condensation with condensable organopolysiloxanes in a manner known per se subsequently produces
an organopolysiloxane having at least one Si-bonded radical $Y^1$ of the formula

$$-(CH_2)_2\text{-}R^2\text{-}(A\text{-}R^3)_z\text{-}O\text{-}CH_2\text{-}CH{=}CH\text{-}R^4 \qquad \text{(II)},$$

in which $R^2$, $R^3$, $R^4$, A and z have the meaning given above, and then in a 2nd step
the double bond of the group $Y^1$ of the organopolysiloxane is shifted to the carbon atom adjacent to the ether oxygen atom
by heating the organopolysiloxane having at least one radical $Y^1$, obtained in the 1st step, in the presence of a catalyst (4) promoting this kind of rearrangement of the double bond,
an organopolysiloxane having at least one Si-bonded group Y of the formula

$$-(CH_2)_2\text{-}R^2\text{-}(A\text{-}R^3)_z\text{-}O\text{-}CH{=}CH\text{-}CH_2\text{-}R^4 \qquad \text{(I)},$$

in which $R^2$, $R^3$, $R^4$, A and z have the meaning given above, being obtained.

**14.** Use of the organopolysiloxanes according to Claim 3 or 6 in light-crosslinkable compositions based on the aforesaid organopolysiloxanes.

**15.** Use of the organopolysiloxanes according to Claim 3 or 6 for preparing light-crosslinkable coatings.

**16.** Organosilicon compounds containing, per molecule, at least one Si-bonded radical $Y^1$ of the formula

$$-(CH_2)_2-R^2-(A-R^3)_z-O-CH_2-CH=CH-R^4 \qquad (II),$$

in which

A denotes -O-, -S- or

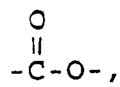

$R^2$ denotes a linear or branched alkylene radical having 1 to 7 carbon atom(s) per radical or denotes a cycloalkylene radical having 5 to 7 carbon atoms per radical,
$R^3$ denotes a linear or branched alkylene radical having 2 to 4 carbon atoms per radical, which may be substituted by a hydroxyl group, methoxy group, ethoxy group or trimethylsiloxy group,
$R^4$ denotes a hydrogen atom or an alkyl radical having 1 to 4 carbon atom(s) per radical and
z denotes 0, 1, or 2.

**17.** Organosilicon compounds according to Claim 16, characterized in that they are organopolysiloxanes.

**18.** Process for the preparation of organosilicon compounds according to Claim 16 or 17, characterized in that an organic compound (1) of the formula

$$H_2C=CH-R^2-(A-R^3)_z-O-CH_2-CH=CH-R^4$$

in which

A denotes -O-, -S- or

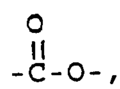

$R^2$ denotes a linear or branched alkylene radical having 1 to 7 carbon atom(s) per radical or denotes a cycloalkylene radical having 5 to 7 carbon atoms per radical,
$R^3$ denotes a linear or branched alkylene radical having 2 to 4 carbon atoms per radical, which may be substituted by a hydroxyl group, methoxy group, ethoxy group or trimethylsiloxy group,
$R^4$ denotes a hydrogen atom or an alkyl radical having 1 to 4 carbon atom(s) per radical and
z denotes 0, 1, or 2,
is subjected to an addition reaction with an organosilicon compound (2) having at least one Si-bonded hydrogen atom in its molecule in the presence of a catalyst (3) promoting the addition of Si-bonded hydrogen to the aliphatic double bond,
an organosilicon compound having at least one Si-bonded radical $Y^1$ of the formula

$$-(CH_2)_2-R^2-(A-R^3)_z-O-CH_2-CH=CH-R^4 \qquad (II),$$

in which $R^2$, $R^3$, $R^4$, A and z have the meaning given above, being obtained.

**19.** Process according to Claim 18, characterized in that the organosilicon compound (2) having at least one Si-bonded hydrogen atom in its molecule is an organopolysiloxane (2b) of the formula

$$H_cR_{3-c}SiO(SiR_2O)_o(SiRHO)_pSiR_{3-c}H_c ,$$

in which

R may be identical or different, and denotes a monovalent, substituted or unsubstituted hydrocarbon radical having 1 to 18 carbon atom(s) per radical,
c denotes 0 or 1,
o denotes 0 or an integer from 1 to 1000, and
p denotes 0 or an integer from 1 to 500.

**20.** Process for the preparation of organosilicon compounds according to Claim 16 or 17, characterized in that an organic compound (1) of the formula

$$H_2C=CH-R^2-(A-R^3)_z-O-CH_2-CH=CH-R^4$$

in which

A denotes -O-, -S- or

$$\overset{\displaystyle O}{\overset{\|}{-C}}-O- ,$$

$R^2$ denotes a linear or branched alkylene radical having 1 to 7 carbon atom(s) per radical or denotes a cycloalkylene radical having 5 to 7 carbon atoms per radical,
$R^3$ denotes a linear or branched alkylene radical having 2 to 4 carbon atoms per radical, which may be substituted by a hydroxyl group, methoxy group, ethoxy group or trimethylsiloxy group,
$R^4$ denotes a hydrogen atom or an alkyl radical having 1 to 4 carbon atom(s) per radical and
z denotes 0, 1, or 2,
is subjected to an addition reaction with a silane (2a) having an Si-bonded hydrogen atom of the formula

$$R_dHSiX_{3-d} ,$$

in which
R may be identical or different, and denotes a monovalent, substituted or unsubstituted hydrocarbon radical having 1 to 18 hydrocarbon atom(s) per radical,
X may be identical or different, and is a halogen atom or a radical of the formula $-OR^1$,
in which $R^1$ denotes a monovalent hydrocarbon radical having 1 to 8 carbon atom(s) per radical which may be interrupted by an ether oxygen atom and
d is 0, 1 or 2,
in the presence of a catalyst (3) promoting the addition of Si-bonded hydrogen to the aliphatic double bond, a silane having an Si-bonded radical $Y^1$ of the formula

$$-(CH_2)_2-R^2-(A-R^3)_z-O-CH_2-CH=CH-R^4 \quad (II),$$

in which $R^2$, $R^3$, $R^4$, A and z have the meaning given above, being obtained
from which mixed hydrolysis with chloro- or alkoxysilanes and/or condensation with condensable organopolysiloxanes in a manner known per se subsequently produces
an organopolysiloxane having at least one Si-bonded radical $Y^1$ of the formula

$$-(CH_2)_2-R^2-(A-R^3)_z-O-CH_2-CH=CH-R^4 \quad (II),$$

in which $R^2$, $R^3$, $R^4$, A and z have the meaning given above, being obtained.

**Claims for the following Contracting State : ES**

1. Process for the preparation of organosilicon compounds containing, per molecule, at least one Si-bonded radical Y of the formula

$$-(CH_2)_2-R^2-(A-R^3)_z-O-CH=CH-CH_2-R^4 \quad (I),$$

in which

A denotes -O-, -S- or

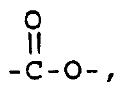

$R^2$ denotes a linear or branched alkylene radical having 1 to 7 carbon atom(s) per radical or denotes a cycloalkylene radical having 5 to 7 carbon atoms per radical,
$R^3$ denotes a linear or branched alkylene radical having 2 to 4 carbon atoms per radical, which may be substituted by a hydroxyl group, methoxy group, ethoxy group or trimethylsiloxy group,
$R^4$ denotes a hydrogen atom or an alkyl radical having 1 to 4 carbon atom(s) per radical and
z denotes 0, 1, or 2,
in which initially in a 1st step an organic compound (1) of the formula

$$H_2C=CH-R^2-(A-R^3)_z-O-CH_2-CH=CH-R^4$$

in which $R^2$, $R^3$, $R^4$, A and z have the meaning given above, is subjected to an addition reaction with an organosilicon compound (2) having at least one Si-bonded hydrogen atom in its molecule in the presence of a catalyst (3) promoting the addition of Si-bonded hydrogen to the aliphatic double bond,
an organosilicon compound having at least one Si-bonded radical $Y^1$ of the formula

$$-(CH_2)_2-R^2-(A-R^3)_z-O-CH_2-CH=CH-R^4 \quad (II),$$

in which $R^2$, $R^3$, $R^4$, A and z have the meaning given above,
being obtained, and then in a 2nd step
the double bond in the radical $Y^1$ is shifted to the carbon atom adjacent to the ether oxygen atom by heating the organosilicon compound having at least one Si-bonded radical $Y^1$, obtained in the 1st step, in the presence of a catalyst (4) promoting this kind of rearrangement of the double bond,
an organosilicon compound having at least one Si-bonded radical Y of the formula

$$-(CH_2)_2-R^2-(A-R^3)_z-O-CH=CH-CH_2-R^4 \quad (I),$$

in which $R^2$, $R^3$, $R^4$, A and z have the meaning given above, being obtained.

2. Process according to Claim 1, characterized in that the organosilicon compound (2) having at least one Si-bonded hydrogen atom in its molecule which is used is a silane (2a) of the formula

$$R_dHSiX_{3-d} ,$$

in which

R may be identical or different, and denotes a monovalent, substituted or unsubstituted hydrocarbon radical having 1 to 18 hydrocarbon atom(s) per radical,
X may be identical or different, and is a halogen atom or a radical of the formula $-OR^1$,
in which $R^1$ denotes a monovalent hydrocarbon radical having 1 to 8 carbon atom(s) per radical which may be interrupted by an ether oxygen atom and

d is 0, 1 or 2.

**3.** Process according to Claim 1, characterized in that the organosilicon compound (2) having at least one Si-bonded hydrogen atom in its molecule which is used is an organopolysiloxane (2b) of the formula

$$H_cR_{3-c}SiO(SiR_2O)_o(SiRHO)_pSiR_{3-c}H_c ,$$

in which

R may be identical or different and denotes a monovalent, substituted or unsubstituted hydrocarbon radical having 1 to 18 carbon atom(s) per radical,
c denotes 0 or 1,
o denotes 0 or an integer from 1 to 1000, and
p denotes 0 or an integer from 1 to 500.

**4.** Process for the preparation of organosilicon compounds containing, per molecule, at least one Si-bonded radical Y of the formula

$$-(CH_2)_2-R^2-(A-R^3)_z-O-CH=CH-CH_2-R^4 \qquad (I),$$

in which

A denotes -O-, -S- or

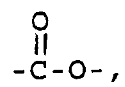

$R^2$ denotes a linear or branched alkylene radical having 1 to 7 carbon atom(s) per radical or denotes a cycloalkylene radical having 5 to 7 carbon atoms per radical,
$R^3$ denotes a linear or branched alkylene radical having 2 to 4 carbon atoms per radical, which may be substituted by a hydroxyl group, methoxy group, ethoxy group or trimethylsiloxy group,
$R^4$ denotes a hydrogen atom or an alkyl radical having 1 to 4 carbon atom(s) per radical and
z denotes 0, 1, or 2,
in which initially in a 1st step an organic compound (1) of the formula

$$H_2C=CH-R^2-(A-R^3)_z-O-CH_2-CH=CH-R^4$$

in which $R^2$, $R^3$, $R^4$, A and z has [sic] the meaning given above, is subjected to an addition reaction with a silane (2a) having an Si-bonded hydrogen atom of the formula

$$R_dHSiX_{3-d} ,$$

in which
R may be identical or different, and denotes a monovalent, substituted or unsubstituted hydrocarbon radical having 1 to 18 hydrocarbon atom(s) per radical,
X may be identical or different, and is a halogen atom or a radical of the formula $-OR^1$,
in which $R^1$ denotes a monovalent hydrocarbon radical having 1 to 8 carbon atom(s) per radical which may be interrupted by an ether oxygen atom and
d is 0, 1 or 2,
in the presence of a catalyst (3) promoting the addition of Si-bonded hydrogen to the aliphatic double bond, a silane having an Si-bonded radical $Y^1$ of the formula

$$-(CH_2)_2-R^2-(A-R^3)_z-O-CH_2-CH=CH-R^4 \qquad (II),$$

in which $R^2$, $R^3$, $R^4$, A and z have the meaning given above, being obtained
from which mixed hydrolysis with chloro- or alkoxysilanes and/or condensation with condensable organopolysiloxanes in a manner known per se subsequently produces
an organopolysiloxane having at least one Si-bonded radical $Y^1$ of the formula

$$-(CH_2)_2-R^2-(A-R^3)_z-O-CH_2-CH=CH-R^4 \qquad (II),$$

in which $R^2$, $R^3$, $R^4$, A and z have the meaning given above, and then in a 2nd step
the double bond of the group $Y^1$ of the organopolysiloxane is shifted to the carbon atom adjacent to the ether oxygen atom
by heating the organopolysiloxane having at least one radical $Y^1$, obtained in the 1st step, in the presence of a catalyst (4) promoting this kind of rearrangement of the double bond,
an organopolysiloxane having at least one Si-bonded group
Y of the formula

$$-(CH_2)_2-R^2-(A-R^3)_z-O-CH=CH-CH_2-R^4 \qquad (I),$$

in which $R^2$, $R^3$, $R^4$, A and z have the meaning given above, being obtained.

**5.** Use of organopolysiloxanes containing, per molecule, at least one Si-bonded radical Y of the formula

$$-(CH_2)_2-R^2-(A-R^3)_z-O-CH=CH-CH_2-R^4 \qquad (I),$$

in which

A denotes -O-, -S- or

$$-\overset{\overset{\displaystyle O}{\|}}{C}-O-,$$

$R^2$ denotes a linear or branched alkylene radical having 1 to 7 carbon atom(s) per radical or denotes a cycloalkylene radical having 5 to 7 carbon atoms per radical,
$R^3$ denotes a linear or branched alkylene radical having 2 to 4 carbon atoms per radical, which may be substituted by a hydroxyl group, methoxy group, ethoxy group or trimethylsiloxy group,
$R^4$ denotes a hydrogen atom or an alkyl radical having 1 to 4 carbon atom(s) per radical and
z denotes 0, 1, or 2, in light-crosslinkable compositions based on the aforesaid organopolysiloxanes.

**6.** Use of organopolysiloxanes containing, per molecule, at least one Si-bonded radical Y of the formula

$$-(CH_2)_2-R^2-(A-R^3)_z-O-CH=CH-CH_2-R^4 \qquad (I),$$

in which

A denotes -O-, -S- or

$$-\overset{\overset{\displaystyle O}{\|}}{C}-O-,$$

$R^2$ denotes a linear or branched alkylene radical having 1 to 7 carbon atom(s) per radical or denotes a cycloalkylene radical having 5 to 7 carbon atoms per radical,
$R^3$ denotes a linear or branched alkylene radical having 2 to 4 carbon atoms per radical, which may be substituted by a hydroxyl group, methoxy group, ethoxy group or trimethylsiloxy group,
$R^4$ denotes a hydrogen atom or an alkyl radical having 1 to 4 carbon atom(s) per radical and
z denotes 0, 1, or 2,
for preparing light-crosslinkable coatings.

7. Use according to Claim 5 or 6, in which the organopolysiloxanes have the general formula

$$R_a(R^1O)_bY_cSiO_{\frac{4-(a+b+c)}{2}} ,$$

in which

a is 0, 1, 2 or 3, on average 0.0 to 3.0,
b is 0, 1, 2 or 3, on average 0.0 to 3.0 and
c is 0 or 1, on average 0.01 to 1.0 and the sum a+b+c is ≦ 4, and on average is 1.0 to 4.0,
R may be identical or different, and denotes a monovalent, substituted or unsubstituted hydrocarbon radical having 1 to 18 carbon atom(s) per radical,
$R^1$ may be identical or different, and denotes a monovalent hydrocarbon radical having 1 to 8 carbon atom(s) per radical which may be interrupted by an ether oxygen atom, and
Y is a radical of the formula

$$-(CH_2)_2-R^2-(A-R^3)_z-O-CH=CH-CH_2-R^4 \quad (I)$$

in which
A denotes -O-, -S- or

$$\overset{O}{\overset{\|}{-C}}-O-,$$

$R^2$ denotes a linear or branched alkylene radical having 1 to 7 carbon atom(s) per radical or denotes a cycloalkylene radical having 5 to 7 carbon atoms per radical,
$R^3$ denotes a linear or branched alkylene radical having 2 to 4 carbon atoms per radical, which may be substituted by a hydroxyl group, methoxy group, ethoxy group or trimethylsiloxy group,
$R^4$ denotes a hydrogen atom or an alkyl radical having 1 to 4 carbon atom(s) per radical and
z denotes 0, 1, or 2.

8. Use according to Claim 5 or 6, in which the organopolysiloxanes have the general formula

$$Y_cR_{3-c}SiO(SiR_2O)_n(SiRYO)_mSiR_{3-c}Y_c$$

in which

R may be identical or different, and denotes a monovalent, substituted or unsubstituted hydrocarbon radical having 1 to 18 carbon atom(s) per radical,
c is 0 or 1,
n is 0 or an integer from 1 to 1000,
m is 0 or an integer from 1 to 500 and
Y is a radical of the formula

$$-(CH_2)_2-R^2-(A-R^3)_z-O-CH=CH-CH_2-R^4 \quad (I)$$

with the proviso that at least one radical Y is present per molecule, and in which

A denotes -O-, -S- or

$$-\overset{\overset{\displaystyle O}{\|}}{C}-O-,$$

$R^2$ denotes a linear or branched alkylene radical having 1 to 7 carbon atom(s) per radical or denotes a cycloalkylene radical having 5 to 7 carbon atoms per radical,
$R^3$ denotes a linear or branched alkylene radical having 2 to 4 carbon atoms per radical, which may be substituted by a hydroxyl group, methoxy group, ethoxy group or trimethylsiloxy group,
$R^4$ denotes a hydrogen atom or an alkyl radical having 1 to 4 carbon atom(s) per radical and
z denotes 0, 1, or 2.

**9.** Use according to one of Claims 5 to 8, in which Y is a radical of the formula

$$-(CH_2)_3\text{-}O\text{-}CH{=}CH\text{-}CH_3,$$

$$-(CH_2)_3\text{-}O\text{-}CH_2\text{-}CH_2\text{-}O\text{-}CH{=}CH\text{-}CH_3 \text{ or}$$

$$-(CH_2)_3\text{-}O\text{-}CH{=}CH\text{-}CH_2\text{-}CH_3$$

**10.** Process for the preparation of organosilicon compounds containing, per molecule, at least one Si-bonded radical $Y^1$ of the formula

$$-(CH_2)_2\text{-}R^2\text{-}(A\text{-}R^3)_z\text{-}O\text{-}CH_2\text{-}CH{=}CH\text{-}R^4 \qquad (II),$$

in which

A denotes -O-, -S- or

$$-\overset{\overset{\displaystyle O}{\|}}{C}-O-,$$

$R^2$ denotes a linear or branched alkylene radical having 1 to 7 carbon atom(s) per radical or denotes a cycloalkylene radical having 5 to 7 carbon atoms per radical,
$R^3$ denotes a linear or branched alkylene radical having 2 to 4 carbon atoms per radical, which may be substituted by a hydroxyl group, methoxy group, ethoxy group or trimethylsiloxy group,
$R^4$ denotes a hydrogen atom or an alkyl radical having 1 to 4 carbon atom(s) per radical and
z denotes 0, 1, or 2,
an organic compound (1) of the formula

$$H_2C{=}CH\text{-}R^2\text{-}(A\text{-}R^3)_z\text{-}O\text{-}CH_2\text{-}CH{=}CH\text{-}R^4$$

in which $R^2$, $R^3$, $R^4$, A and z have the meaning given above, being subjected to an addition reaction with an organosilicon compound (2) having at least one Si-bonded hydrogen atom in its molecule in the presence of a catalyst (3) promoting the addition of Si-bonded hydrogen to the aliphatic double bond,
an organosilicon compound having at least one Si-bonded radical $Y^1$ of the formula

$$-(CH_2)_2\text{-}R^2\text{-}(A\text{-}R^3)_z\text{-}O\text{-}CH_2\text{-}CH{=}CH\text{-}R^4 \qquad (II),$$

in which $R^2$, $R^3$, $R^4$, A and z have the meaning given above, being obtained.

**11.** Process according to Claim 10, characterized in that the organosilicon compound (2) having at least one Si-bonded hydrogen atom in its molecule is an organopolysiloxane (2b) of the formula

$$H_cR_{3-c}SiO(SiR_2O)_o(SiRHO)_pSiR_{3-c}H_c ,$$

in which

R may be identical or different, and denotes a monovalent, substituted or unsubstituted hydrocarbon radical having 1 to 18 carbon atom(s) per radical,
c denotes 0 or 1,
o denotes 0 or an integer from 1 to 1000, and
p denotes 0 or an integer from 1 to 500.

**12.** Process for the preparation of organosilicon compounds containing, per molecule, at least one Si-bonded radical $Y^1$ of the formula

$$-(CH_2)_2-R^2-(A-R^3)_z-O-CH_2-CH=CH-R^4 \qquad (II),$$

in which

A denotes -O-, -S- or

$$\begin{array}{c} O \\ \| \\ -C-O-, \end{array}$$

$R^2$ denotes a linear or branched alkylene radical having 1 to 7 carbon atom(s) per radical or denotes a cycloalkylene radical having 5 to 7 carbon atoms per radical,
$R^3$ denotes a linear or branched alkylene radical having 2 to 4 carbon atoms per radical, which may be substituted by a hydroxyl group, methoxy group, ethoxy group or trimethylsiloxy group,
$R^4$ denotes a hydrogen atom or an alkyl radical having 1 to 4 carbon atom(s) per radical and
z denotes 0, 1, or 2,
an organic compound (1) of the formula

$$H_2C=CH-R^2-(A-R^3)_z-O-CH_2-CH=CH-R^4$$

in which
A denotes -O-, -S- or

$$\begin{array}{c} O \\ \| \\ -C-O-, \end{array}$$

$R^2$ denotes a linear or branched alkylene radical having 1 to 7 carbon atom(s) per radical or denotes a cycloalkylene radical having 5 to 7 carbon atoms per radical,
$R^3$ denotes a linear or branched alkylene radical having 2 to 4 carbon atoms per radical, which may be substituted by a hydroxyl group, methoxy group, ethoxy group or trimethylsiloxy group,
$R^4$ denotes a hydrogen atom or an alkyl radical having 1 to 4 carbon atom(s) per radical and
z denotes 0, 1, or 2,
being subjected to an addition reaction with a silane (2a) having an Si-bonded hydrogen atom of the formula

$$R_dHSiX_{3-d} ,$$

in which
R may be identical or different, and denotes a monovalent, substituted or unsubstituted hydrocarbon radical having 1 to 18 hydrocarbon atom(s) per radical,
X may be identical or different, and is a halogen atom or a radical of the formula $-OR^1$, in which $R^1$ denotes a monovalent hydrocarbon radical having 1 to 8 carbon atom(s) per radical which may be interrupted by an ether oxygen atom and

d is 0, 1 or 2,
in the presence of a catalyst (3) promoting the addition of Si-bonded hydrogen to the aliphatic double bond, a silane having an Si-bonded radical $Y^1$ of the formula

$$-(CH_2)_2-R^2-(A-R^3)_z-O-CH_2-CH=CH-R^4 \quad (II),$$

in which $R^2$, $R^3$, $R^4$, A and z have the meaning given above, being obtained
from which mixed hydrolysis with chloro- or alkoxysilanes and/or condensation with condensable organopolysiloxanes in a manner known per se subsequently produces
an organopolysiloxane having at least one Si-bonded radical $Y^1$ of the formula

$$-(CH_2)_2-R^2-(A-R^3)_z-O-CH_2-CH=CH-R^4 \quad (II),$$

in which $R^2$, $R^3$, $R^4$, A and z have the meaning given above, being obtained.

## Revendications

**Revendications pour les Etats contractants suivants : AT, BE, CH, DE, FR, GB, IT, LI, NL, SE**

**1.** Composés organosiliciques contenant, par molécule, au moins un radical Y à liaison Si, de formule

$$-(CH_2)_2-R^2-(A-R^3)_z-O-CH=CH-CH_2-R^4 \quad (I)$$

où

A représente -O-, -S- ou

$$-\overset{\overset{\displaystyle O}{\|}}{C}-O-,$$

$R^2$ représente un radical alcoylène linéaire ou ramifié avec 1 à 7 atomes de carbone par radical ou un radical cycloalcoylène avec 5 à 7 atomes de carbone par radical,
$R^3$ représente un radical alcoylène linéaire ou ramifié avec 2 à 4 atomes de carbone par radical, qui peut être substitué par un groupe hydroxyle, un groupe méthoxy, un groupe éthoxy ou un groupe triméthylsiloxy,
$R^4$ représente un atome d'hydrogène ou un radical alcoyle avec 1 à 4 atomes de carbone par radical, et
z représente 0, 1 ou 2.

**2.** Composés organosiliciques suivant la revendication 1, caractérisés en ce que ce sont des silanes.

**3.** Composés organosiliciques suivant la revendication 1, caractérisés en ce que ce sont des organopolysiloxanes.

**4.** Composés organosiliciques suivant la revendication 1, caractérisés en ce que ce sont ceux de formule générale

$$R_a(R^1O)_bY_cSiO_{\frac{4-(a+b+c)}{2}},$$

où

a est 0, 1, 2 ou 3, en moyenne 0,0 à 3,0,
b est 0, 1, 2 ou 3, en moyenne 0,0 à 3,0, et
c est 0 ou 1, en moyenne 0,01 à 1,0 et la somme $a+b+c \leq 4$, en moyenne 1,0 à 4,0,
R peut être identique ou différent et représente un radical hydrocarbure monovalent, facultativement substitué, avec 1 à 18 atomes de carbone par radical,

$R^1$ peut être identique ou différent et représente un radical hydrocarbure monovalent, facultativement interrompu par un atome d'oxygène d'éther, avec 1 à 8 atomes de carbone par radical, et

Y est un radical de formule

$$-(CH_2)_2-R^2-(A-R^3)_z-O-CH=CH-CH_2-R^4 \qquad (I)$$

où

A représente -O-, -S- ou

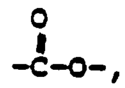

$R^2$ représente un radical alcoylène linéaire ou ramifié avec 1 à 7 atomes de carbone par radical ou un radical cycloalcoylène avec 5 à 7 atomes de carbone par radical,

$R^3$ représente un radical alcoylène linéaire ou ramifié avec 2 à 4 atomes de carbone par radical, qui peut être substitué par un groupe hydroxyle, un groupe méthoxy, un groupe éthoxy ou un groupe triméthylsiloxy,

$R^4$ représente un atome d'hydrogène ou un radical alcoyle avec 1 à 4 atomes de carbone par radical, et

z représente 0, 1 ou 2.

**5.** Composés organosiliciques suivant les revendications 1, 2 ou 4, caractérisés en ce que ce sont des silanes de formule

$$R_dYSi(OR^1)_{3-d}$$

où

d est 0, 1 ou 2,

R peut être identique ou différent et représente un radical hydrocarbure monovalent, facultativement substitué, avec 1 à 18 atomes de carbone par radical,

$R^1$ peut être identique ou différent et représente un radical hydrocarbure monovalent, facultativement interrompu par un atome d'oxygène d'éther, avec 1 à 8 atomes de carbone par radical, et

Y est un radical de formule

$$-(CH_2)_2-R^2-(A-R^3)_z-O-CH=CH-CH_2-R^4 \qquad (I)$$

où

A représente -O-, -S- ou

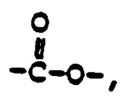

$R^2$ représente un radical alcoylène linéaire ou ramifié avec 1 à 7 atomes de carbone par radical ou un radical cycloalcoylène avec 5 à 7 atomes de carbone par radical,

$R^3$ représente un radical alcoylène linéaire ou ramifié avec 2 à 4 atomes de carbone par radical, qui peut être substitué par un groupe hydroxyle, un groupe méthoxy, un groupe éthoxy ou un groupe triméthylsiloxy,

$R^4$ représente un atome d'hydrogène ou un radical alcoyle avec 1 à 4 atomes de carbone par radical, et

z représente 0, 1 ou 2.

**6.** Composés organosiliciques suivant les revendications 1, 3 ou 4, caractérisés en ce que ce sont des organopolysiloxanes de formule

$$Y_cR_{3-c}SiO(SiR_2O)_n(SiRYO)_mSiR_{3-c}Y_c$$

où

R peut être identique ou différent et représente un radical hydrocarbure monovalent, facultativement substitué, avec 1 à 18 atomes de carbone par radical,
c est 0 ou 1,
n est 0 ou un nombre entier de 1 à 1000,
m est 0 ou un nombre entier de 1 à 500, et
Y est un radical de formule

$$-(CH_2)_2-R^2-(A-R^3)_z-O-CH=CH-CH_2-R^4 \qquad (I)$$

avec la condition qu'il y a au moins un radical Y par molécule
où
A représente -O-, -S- ou

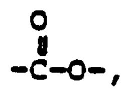

$R^2$ représente un radical alcoylène linéaire ou ramifié avec 1 à 7 atomes de carbone par radical ou un radical cycloalcoylène avec 5 à 7 atomes de carbone par radical,
$R^3$ représente un radical alcoylène linéaire ou ramifié avec 2 à 4 atomes de carbone par radical, qui peut être substitué par un groupe hydroxyle, un groupe méthoxy, un groupe éthoxy ou un groupe triméthylsiloxy,
$R^4$ représente un atome d'hydrogène ou un radical alcoyle avec 1 à 4 atomes de carbone par radical, et
z représente 0, 1 ou 2.

**7.** Composés organosiliciques suivant l'une quelconque des revendications 1 à 6, caractérisés en ce que Y est un radical de formule

$$-(CH_2)_3-O-CH=CH-CH_3.$$

**8.** Composés organosiliciques suivant l'une quelconque des revendications 1 à 6, caractérisés en ce que Y est un radical de formule

$$-(CH_2)_3-O-CH_2-CH_2-O-CH=CH-CH_3.$$

**9.** Composés organosiliciques suivant l'une quelconque des revendications 1 à 6, caractérisés en ce que Y est un radical de formule

$$-(CH_2)_3-O-CH=CH-CH_2-CH_3.$$

**10.** Procédé de préparation des composés organosiliciques suivant l'une quelconque des revendications 1 à 9, caractérisé en ce que dans une première étape,
un composé organique (1) de formule

$$H_2C=CH-R^2-(A-R^3)_z-O-CH_2-CH=CH-R^4$$

où

A représente -O-, -S- ou

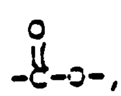

$R^2$ représente un radical alcoylène linéaire ou ramifié avec 1 à 7 atomes de carbone par radical ou un radical cycloalcoylène avec 5 à 7 atomes de carbone par radical,
$R^3$ représente un radical alcoylène linéaire ou ramifié avec 2 à 4 atomes de carbone par radical, qui peut être substitué par un groupe hydroxyle, un groupe méthoxy, un groupe éthoxy ou un groupe triméthylsiloxy,
$R^4$ représente un atome d'hydrogène ou un radical alcoyle avec 1 à 4 atomes de carbone par radical, et
z représente 0, 1 ou 2,
est additionné sur un composé organosilicique (2) avec au moins un atome d'hydrogène à liaison Si dans sa molécule, en présence d'un catalyseur (3) activant l'addition d'atome d'hydrogène à liaison Si sur une double liaison aliphatique,
où l'on obtient un composé organosilicique avec au moins un radical $Y^1$ à liaison Si, de formule

$$-(CH_2)_2-R^2-(A-R^3)_z-O-CH_2-CH=CH-R^4 \quad (II)$$

où $R^2$, $R^3$, $R^4$, A et z ont la signification donnée ci-dessus, et ensuite,
dans une deuxième étape,
la double liaison du radical $Y^1$ est transposée à l'atome de carbone voisin de l'atome d'oxygène d'éther, par chauffage du composé organosilicique obtenu à la première étape, avec au moins un radical $Y^1$ à liaison Si, en présence d'un catalyseur (4) activant une telle transposition de double liaison,
où l'on obtient un composé organosilicique avec au moins un radical Y à liaison Si, de formule

$$-(CH_2)_2-R^2-(A-R^3)_z-O-CH=CH-CH_2-R^4 \quad (I)$$

où $R^2$, $R^3$, $R^4$, A et z ont la signification donnée ci-dessus.

**11.** Procédé suivant la revendication 10, caractérisé en ce que l'on utilise comme composé organosilicique (2) avec au moins un atome d'hydrogène à liaison Si dans sa molécule, les silanes (2a) de formule

$$R_dHSiX_{3-d}$$

où

R peut être identique ou différent et représente un radical hydrocarbure monovalent, facultativement substitué, avec 1 à 18 atomes d'hydrocarbure par radical,
X peut être identique ou différent et est un atome d'halogène ou un radical de formule $-OR^1$, où
$R^1$ représente un radical hydrocarbure monovalent, facultativement interrompu par un atome d'oxygène d'éther, avec 1 à 8 atomes de carbone par radical, et
d est 0, 1 ou 2.

**12.** Procédé suivant la revendication 10, caractérisé en ce que l'on utilise comme composé organosilicique (2) avec au moins un atome d'hydrogène à liaison Si dans sa molécule, les organopolysiloxanes (2b) de formule

$$H_cR_{3-c}SiO(SiR_2O)_o(SiRHO)_pSiR_{3-c}H_c$$

où

R peut être identique ou différent et représente un radical hydrocarbure monovalent, facultativement substitué, avec 1 à 18 atomes de carbone par radical,
c est 0 ou 1,
o est 0 ou un nombre entier de 1 à 1000, et
p est 0 ou un nombre entier de 1 à 500.

**13.** Procédé de préparation de composés organosiliciques suivant la revendication 3 ou 6, caractérisé en ce que dans une première étape,
un composé organique (1) de formule

$$H_2C=CH-R^2-(A-R^3)_z-O-CH_2-CH=CH-R^4$$

où

A représente -O-, -S- ou

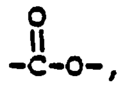

$R^2$ représente un radical alcoylène linéaire ou ramifié avec 1 à 7 atomes de carbone par radical ou un radical cycloalcoylène avec 5 à 7 atomes de carbone par radical,
$R^3$ représente un radical alcoylène linéaire ou ramifié avec 2 à 4 atomes de carbone par radical, qui peut être substitué par un groupe hydroxyle, un groupe méthoxy, un groupe éthoxy ou un groupe triméthylsiloxy,
$R^4$ représente un atome d'hydrogène ou un radical alcoyle avec 1 à 4 atomes de carbone par radical, et
z représente 0, 1 ou 2, est additionné sur un silane (2a) avec au moins un atome d'hydrogène à liaison Si, de formule

$$R_dHSiX_{3-d}$$

où
R peut être identique ou différent et représente un radical hydrocarbure monovalent, facultativement substitué, avec 1 à 18 atomes d'hydrocarbure par radical,
X peut être identique ou différent et est un atome d'halogène ou un radical de formule $-OR^1$, où
$R^1$ représente un radical hydrocarbure monovalent, facultativement interrompu par un atome d'oxygène d'éther, avec 1 à 8 atomes de carbone par radical, et
d est 0, 1 ou 2,
en présence d'un catalyseur (3) activant l'addition d'hydrogène à liaison Si sur une double liaison aliphatique, où l'on obtient un silane avec un radical $Y^1$ à liaison Si, de formule

$$-(CH_2)_2-R^2-(A-R^3)_z-O-CH_2-CH=CH-R^4 \quad (II)$$

où $R^2$, $R^3$, $R^4$, A et z ont la signification donnée ci-dessus, à partir duquel, suite à une hydrolyse mixte au moyen de chloro- ou d'alcoxysilanes et/ou à une condensation avec des organopolysiloxanes capables de condensation, de manière connue en soi,
on obtient un organopolysiloxane avec au moins un radical $Y^1$ à liaison Si, de formule

$$-(CH_2)_2-R^2-(A-R^3)_z-O-CH_2-CH=CH-R^4 \quad (II)$$

où $R^2$, $R^3$, $R^4$, A et z ont la signification donnée ci-dessus,
et ensuite,
dans une deuxième étape,
la double liaison du radical $Y^1$ de l'organopolysiloxane est transposée à l'atome de carbone voisin de l'atome d'oxygène d'éther, par chauffage de l'organopolysiloxane obtenu à la première étape, avec au moins un radical $Y^1$, en présence d'un catalyseur (4) activant une telle transposition de double liaison,
où l'on obtient un organopolysiloxane avec au moins un radical Y à liaison Si, de formule

$$-(CH_2)_2-R^2-(A-R^3)_z-O-CH=CH-CH_2-R^4 \quad (I)$$

où $R^2$, $R^3$, $R^4$, A et z ont la signification donnée ci-dessus.

**14.** Utilisation des organopolysiloxanes suivant la revendication 3 ou 6, dans des compositions réticulables par la lumière, à base des organopolysiloxanes cités précédemment.

**15.** Utilisation des organopolysiloxanes suivant la revendication 3 ou 6, pour la préparation de revêtements réticulables par la lumière.

**16.** Composés organosiliciques contenant par molécule, au moins un radical $Y^1$ à liaison Si, de formule

$$-(CH_2)_2-R^2-(A-R^3)_z-O-CH_2-CH=CH-R^4 \quad (II)$$

où

A représente -O-, -S- ou

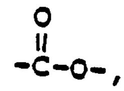

$R^2$ représente un radical alcoylène linéaire ou ramifié avec 1 à 7 atomes de carbone par radical ou un radical cycloalcoylène avec 5 à 7 atomes de carbone par radical,
$R^3$ représente un radical alcoylène linéaire ou ramifié avec 2 à 4 atomes de carbone par radical, qui peut être substitué par un groupe hydroxyle, un groupe méthoxy, un groupe éthoxy ou un groupe triméthylsiloxy,
$R^4$ représente un atome d'hydrogène ou un radical alcoyle avec 1 à 4 atomes de carbone par radical, et
z représente 0, 1 ou 2.

**17.** Composés organosiliciques suivant la revendication 16, caractérisés en ce que ce sont des organopolysiloxanes.

**18.** Procédé de préparation de composés organosiliciques suivant la revendication 16 ou 17, caractérisé en ce qu'un composé organique (1) de formule

$$H_2C=CH-R^2-(A-R^3)_z-O-CH_2-CH=CH-R^4$$

où

A représente -O-, -S- ou

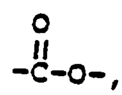

$R^2$ représente un radical alcoylène linéaire ou ramifié avec 1 à 7 atomes de carbone par radical ou un radical cycloalcoylène avec 5 à 7 atomes de carbone par radical,
$R^3$ représente un radical alcoylène linéaire ou ramifié avec 2 à 4 atomes de carbone par radical, qui peut être substitué par un groupe hydroxyle, un groupe méthoxy, un groupe éthoxy ou un groupe triméthylsiloxy,
$R^4$ représente un atome d'hydrogène ou un radical alcoyle avec 1 à 4 atomes de carbone par radical, et
z représente 0, 1 ou 2,
est additionné sur un composé organosilicique (2) avec au moins un atome d'hydrogène à liaison Si dans sa molécule, en présence d'un catalyseur (3) activant l'addition d'hydrogène à liaison Si sur une double liaison aliphatique,
où l'on obtient un composé organosilicique avec au moins un radical $Y^1$ à liaison Si, de formule

$$-(CH_2)_2-R^2-(A-R^3)_z-O-CH_2-CH=CH-R^4 \qquad (II)$$

où $R^2$, $R^3$, $R^4$, A et z ont la signification donnée ci-dessus.

**19.** Procédé suivant la revendication 18, caractérisé en ce que, comme composé organosilicique (2) avec au moins un atome d'hydrogène à liaison Si dans sa molécule, on utilise un organopolysiloxane (2b) de formule

$$H_cR_{3-c}SiO(SiR_2O)_o(SiRHO)_pSiR_{3-c}H_c$$

où

R peut être identique ou différent et représente un radical hydrocarbure monovalent, facultativement substitué, avec 1 à 18 atomes de carbone par radical,
c est 0 ou 1,
o est 0 ou un nombre entier de 1 à 1000, et
p est 0 ou un nombre entier de 1 à 500.

**20.** Procédé de préparation de composés organosiliciques suivant la revendication 16 ou 17, caractérisé en ce qu'un composé organique (1) de formule

$$H_2C=CH-R^2-(A-R^3)_z-O-CH_2-CH=CH-R^4$$

où

A représente -O-, -S- ou

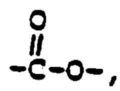

$R^2$ représente un radical alcoylène linéaire ou ramifié avec 1 à 7 atomes de carbone par radical ou un radical cycloalcoylène avec 5 à 7 atomes de carbone par radical,
$R^3$ représente un radical alcoylène linéaire ou ramifié avec 2 à 4 atomes de carbone par radical, qui peut être substitué par un groupe hydroxyle, un groupe méthoxy, un groupe éthoxy ou un groupe triméthylsiloxy,
$R^4$ représente un atome d'hydrogène ou un radical alcoyle avec 1 à 4 atomes de carbone par radical, et
z représente 0, 1 ou 2,
est additionné sur un silane (2a) avec un atome d'hydrogène à liaison Si, de formule

$$R_dHSiX_{3-d}$$

où
R peut être identique ou différent et représente un radical hydrocarbure monovalent, facultativement substitué, avec 1 à 18 atomes d'hydrocarbure par radical,
X peut être identique ou différent et est un atome d'halogène ou un radical de formule $-OR^1$, où
$R^1$ représente un radical hydrocarbure monovalent, facultativement interrompu par un atome d'oxygène d'éther, avec 1 à 8 atomes de carbone par radical, et
d est 0, 1 ou 2
en présence d'un catalyseur (3) activant l'addition d'hydrogène à liaison Si sur une double liaison aliphatique, où l'on obtient un silane avec un radical $Y^1$ à liaison Si, de formule

$$-(CH_2)_2-R^2-(A-R^3)_z-O-CH_2-CH=CH-R^4 \qquad (II)$$

où $R^2$, $R^3$, $R^4$, A et z ont la signification donnée ci-dessus, à partir duquel, suite à une hydrolyse mixte au moyen de chloro- ou d'alcoxysilanes et/ou à une condensation avec des organopolysiloxanes capables de condensation, de manière connue en soi,
on obtient un organopolysiloxane avec au moins un radical $Y^1$ à liaison Si, de formule

$$-(CH_2)_2-R^2-(A-R^3)_z-O-CH_2-CH=CH-R^4 \qquad (II)$$

où $R^2$, $R^3$, $R^4$, A et z ont la signification donnée ci-dessus.

**Revendications pour l'Etat contractant suivant : ES**

**1.** Procédé de préparation des composés organosiliciques contenant, par molécule, au moins un radical Y à liaison Si, de formule

$$-(CH_2)_2-R^2-(A-R^3)_z-O-CH=CH-CH_2-R^4 \qquad (I)$$

où

A représente -O-, -S- ou

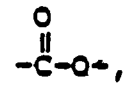

$R^2$ représente un radical alcoylène linéaire ou ramifié avec 1 à 7 atomes de carbone par radical ou un radical cycloalcoylène avec 5 à 7 atomes de carbone par radical,
$R^3$ représente un radical alcoylène linéaire ou ramifié avec 2 à 4 atomes de carbone par radical, qui peut être substitué par un groupe hydroxyle, un groupe méthoxy, un groupe éthoxy ou un groupe triméthylsiloxy,
$R^4$ représente un atome d'hydrogène ou un radical alcoyle avec 1 à 4 atomes de carbone par radical, et
z représente 0, 1 ou 2,
où
dans une première étape,
un composé organique (1) de formule

$$H_2C{=}CH\text{-}R^2\text{-}(A\text{-}R^3)_z\text{-}O\text{-}CH_2\text{-}CH{=}CH\text{-}R^4$$

où $R^2$, $R^3$, $R^4$, A et z ont la signification donnée ci-dessus,
est additionné sur un composé organosilicique (2) avec au moins un atome d'hydrogène à liaison Si dans sa molécule, en présence d'un catalyseur (3) activant l'addition d'hydrogène à liaison Si sur une double liaison aliphatique,
où l'on obtient un composé organosilicique avec au moins un radical $Y^1$ à liaison Si, de formule

$$-(CH_2)_2\text{-}R^2\text{-}(A\text{-}R^3)_z\text{-}O\text{-}CH_2\text{-}CH{=}CH\text{-}R^4 \qquad (II)$$

où $R^2$, $R^3$, $R^4$, A et z ont la signification donnée ci-dessus,
et ensuite,
dans une deuxième étape,
la double liaison du radical $Y^1$ est transposée à l'atome de carbone voisin de l'atome d'oxygène d'éther, par chauffage du composé organosilicique obtenu à la première étape, avec au moins un radical $Y^1$ à liaison Si, en présence d'un catalyseur (4) activant une telle transposition de double liaison,
où l'on obtient un composé organosilicique avec au moins un radical Y à liaison Si, de formule

$$-(CH_2)_2\text{-}R^2\text{-}(A\text{-}R^3)_z\text{-}O\text{-}CH{=}CH\text{-}CH_2\text{-}R^4 \qquad (I)$$

où $R^2$, $R^3$, $R^4$, A et z ont la signification donnée ci-dessus.

2. Procédé suivant la revendication 1, caractérisé en ce que l'on utilise comme composé organosilicique (2) avec au moins un atome d'hydrogène à liaison Si dans sa molécule, les silanes (2a) de formule

$$R_dHSiX_{3-d}$$

où

R peut être identique ou différent et représente un radical hydrocarbure monovalent, facultativement substitué, avec 1 à 18 atomes d'hydrocarbure par radical,
X peut être identique ou différent et est un atome d'halogène ou un radical de formule $-OR^1$, où
$R^1$ représente un radical hydrocarbure monovalent, facultativement interrompu par un atome d'oxygène d'éther, avec 1 à 8 atomes de carbone par radical, et
d est 0, 1 ou 2.

3. Procédé suivant la revendication 1, caractérisé en ce que l'on utilise comme composé organosilicique (2) avec au moins un atome d'hydrogène à liaison Si dans sa molécule, les organopolysiloxanes (2b) de formule

$$H_cR_{3-c}SiO(SiR_2O)_o(SiRHO)_pSiR_{3-c}H_c$$

où

R peut être identique ou différent et représente un radical hydrocarbure monovalent, facultativement substitué, avec 1 à 18 atomes de carbone par radical,
c est 0 ou 1,
o est 0 ou un nombre entier de 1 à 1000, et
p est 0 ou un nombre entier de 1 à 500.

4. Procédé de préparation de composés organosiliciques contenant, par molécule, au moins un radical Y à liaison Si, de formule

$$-(CH_2)_2-R^2-(A-R^3)_z-O-CH=CH-CH_2-R^4 \quad (I)$$

où

A représente -O-, -S- ou

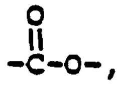

$R^2$ représente un radical alcoylène linéaire ou ramifié avec 1 à 7 atomes de carbone par radical ou un radical cycloalcoylène avec 5 à 7 atomes de carbone par radical,
$R^3$ représente un radical alcoylène linéaire ou ramifié avec 2 à 4 atomes de carbone par radical, qui peut être substitué par un groupe hydroxyle, un groupe méthoxy, un groupe éthoxy ou un groupe triméthylsiloxy,
$R^4$ représente un atome d'hydrogène ou un radical alcoyle avec 1 à 4 atomes de carbone par radical, et
z représente 0, 1 ou 2,
où
dans une première étape,
un composé organique (1) de formule

$$H_2C=CH-R^2-(A-R^3)_z-O-CH_2-CH=CH-R^4$$

où $R^2$, $R^3$, $R^4$, A et z ont la signification donnée ci-dessus,
est additionné sur un silane (2a) avec un atome d'hydrogène à liaison Si, de formule

$$R_dHSiX_{3-d}$$

où
R peut être identique ou différent et représente un radical hydrocarbure monovalent, facultativement substitué, avec 1 à 18 atomes d'hydrocarbure par radical,
X peut être identique ou différent et est un atome d'halogène ou un radical de formule $-OR^1$, où
$R^1$ représente un radical hydrocarbure monovalent, facultativement interrompu par un atome d'oxygène d'éther, avec 1 à 8 atomes de carbone par radical, et
d est 0, 1 ou 2,
en présence d'un catalyseur (3) activant l'addition d'hydrogène à liaison Si sur une double liaison aliphatique, où l'on obtient un silane avec un radical $Y^1$ à liaison Si, de formule

$$-(CH_2)_2-R^2-(A-R^3)_z-O-CH_2-CH=CH-R^4 \quad (II)$$

où $R^2$, $R^3$, $R^4$, A et z ont la signification donnée ci-dessus, à partir duquel, suite à une hydrolyse mixte au moyen de chloro- ou d'alcoxysilanes et/ou à une condensation avec des organopolysiloxanes capables de condensation, de manière connue en soi,
on obtient un organopolysiloxane avec au moins un radical $Y^1$ à liaison Si, de formule

$$-(CH_2)_2-R^2-(A-R^3)_z-O-CH_2-CH=CH-R^4 \qquad (II)$$

où $R^2$, $R^3$, $R^4$, A et z ont la signification donnée ci-dessus,
et ensuite,
dans une deuxième étape,
la double liaison du radical $Y^1$ de l'organopolysiloxane est transposée à l'atome de carbone voisin de l'atome d'oxygène d'éther, par chauffage de l'organopolysiloxane obtenu à la première étape, avec au moins un radical $Y^1$, en présence d'un catalyseur (4) activant une telle transposition de double liaison,
où l'on obtient un organopolysiloxane avec au moins un radical Y à liaison Si, de formule

$$-(CH_2)_2-R^2-(A-R^3)_z-O-CH=CH-CH_2-R^4 \qquad (I)$$

où $R^2$, $R^3$, $R^4$, A et z ont la signification donnée ci-dessus.

**5.** Utilisation des organopolysiloxanes contenant par molécule, au moins un radical Y à liaison Si, de formule

$$-(CH_2)_2-R^2-(A-R^3)_z-O-CH=CH-CH_2-R^4 \qquad (I)$$

où

A représente -O-, -S- ou

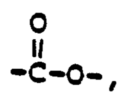

$R^2$ représente un radical alcoylène linéaire ou ramifié avec 1 à 7 atomes de carbone par radical ou un radical cycloalcoylène avec 5 à 7 atomes de carbone par radical,
$R^3$ représente un radical alcoylène linéaire ou ramifié avec 2 à 4 atomes de carbone par radical, qui peut être substitué par un groupe hydroxyle, un groupe méthoxy, un groupe éthoxy ou un groupe triméthylsiloxy,
$R^4$ représente un atome d'hydrogène ou un radical alcoyle avec 1 à 4 atomes de carbone par radical, et
z représente 0, 1 ou 2, dans des compositions réticulables par la lumière, à base des organopolysiloxanes cités précédemment.

**6.** Utilisation des organopolysiloxanes contenant par molécule, au moins un radical Y à liaison Si, de formule

$$-(CH_2)_2-R^2-(A-R^3)_z-O-CH=CH-CH_2-R^4 \qquad (I)$$

où

A représente -O-, -S- ou

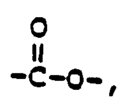

$R^2$ représente un radical alcoylène linéaire ou ramifié avec 1 à 7 atomes de carbone par radical ou un radical cycloalcoylène avec 5 à 7 atomes de carbone par radical,
$R^3$ représente un radical alcoylène linéaire ou ramifié avec 2 à 4 atomes de carbone par radical, qui peut être substitué par un groupe hydroxyle, un groupe méthoxy, un groupe éthoxy ou un groupe triméthylsiloxy,
$R^4$ représente un atome d'hydrogène ou un radical alcoyle avec 1 à 4 atomes de carbone par radical, et
z représente 0, 1 ou 2,
pour la préparation de revêtements réticulables par la lumière.

**7.** Utilisation suivant la revendication 5 ou 6, où les organopolysiloxanes sont ceux de formule générale

$$R_a(R^1O)_bY_cSiO_{\frac{4-(a+b+c)}{2}} ,$$

où

a est 0, 1, 2 ou 3, en moyenne 0,0 à 3,0,
b est 0, 1, 2 ou 3, en moyenne 0,0 à 3,0, et
c est 0 ou 1, en moyenne 0,01 à 1,0 et la somme $a+b+c \leqq 4$ , en moyenne 1,0 à 4,0,
R peut être identique ou différent et représente un radical hydrocarbure monovalent, facultativement substitué, avec 1 à 18 atomes de carbone par radical,
$R^1$ peut être identique ou différent et représente un radical hydrocarbure monovalent, facultativement interrompu par un atome d'oxygène d'éther, avec 1 à 8 atomes de carbone par radical, et
Y est un radical de formule

$$-(CH_2)_2-R^2-(A-R^3)_z-O-CH=CH-CH_2-R^4 \quad (I)$$

où
A représente -O-, -S- ou

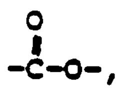

$R^2$ représente un radical alcoylène linéaire ou ramifié avec 1 à 7 atomes de carbone par radical ou un radical cycloalcoylène avec 5 à 7 atomes de carbone par radical,
$R^3$ représente un radical alcoylène linéaire ou ramifié avec 2 à 4 atomes de carbone par radical, qui peut être substitué par un groupe hydroxyle, un groupe méthoxy, un groupe éthoxy ou un groupe triméthylsiloxy,
$R^4$ représente un atome d'hydrogène ou un radical alcoyle avec 1 à 4 atomes de carbone par radical, et
z représente 0, 1 ou 2.

**8.** Utilisation suivant la revendication 5 ou 6, où les organopolysiloxanes sont ceux de formule générale

$$Y_cR_{3-c}SiO(SiR_2O)_n(SiRYO)_mSiR_{3-c}Y_c$$

où

R peut être identique ou différent et représente un radical hydrocarbure monovalent, facultativement substitué, avec 1 à 18 atomes de carbone par radical,
c est 0 ou 1,
n est 0 ou un nombre entier de 1 à 1000,
m est 0 ou un nombre entier de 1 à 500, et
Y est un radical de formule

$$-(CH_2)_2-R^2-(A-R^3)_z-O-CH=CH-CH_2-R^4 \quad (I)$$

avec la condition qu'il y a au moins un radical Y par molécule
où

A représente -O-, -S- ou

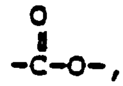

$R^2$ représente un radical alcoylène linéaire ou ramifié avec 1 à 7 atomes de carbone par radical ou un radical cycloalcoylène avec 5 à 7 atomes de carbone par radical,
$R^3$ représente un radical alcoylène linéaire ou ramifié avec 2 à 4 atomes de carbone par radical, qui peut être substitué par un groupe hydroxyle, un groupe méthoxy, un groupe éthoxy ou un groupe triméthylsiloxy,
$R^4$ représente un atome d'hydrogène ou un radical alcoyle avec 1 à 4 atomes de carbone par radical, et
z représente 0, 1 ou 2.

**9.** Utilisation suivant l'une quelconque des revendications 5 à 8, où Y est un radical de formule

$$-(CH_2)_3\text{-O-CH=CH-}CH_3,$$

$$-(CH_2)_3\text{-O-}CH_2\text{-}CH_2\text{-O-CH=CH-}CH_3 \text{ ou}$$

$$-(CH_2)_3\text{-O-CH=CH-}CH_2\text{-}CH_3.$$

**10.** Procédé de préparation des composés organosiliciques contenant, par molécule, au moins un radical $Y^1$ à liaison Si, de formule

$$-(CH_2)_2\text{-}R^2\text{-}(A\text{-}R^3)_z\text{-O-}CH_2\text{-CH=CH-}R^4 \qquad (II)$$

où

A représente -O-, -S- ou

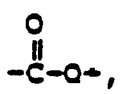

$R^2$ représente un radical alcoylène linéaire ou ramifié avec 1 à 7 atomes de carbone par radical ou un radical cycloalcoylène avec 5 à 7 atomes de carbone par radical,
$R^3$ représente un radical alcoylène linéaire ou ramifié avec 2 à 4 atomes de carbone par radical, qui peut être substitué par un groupe hydroxyle, un groupe méthoxy, un groupe éthoxy ou un groupe triméthylsiloxy,
$R^4$ représente un atome d'hydrogène ou un radical alcoyle avec 1 à 4 atomes de carbone par radical, et
z représente 0, 1 ou 2,
où un composé organique (1) de formule

$$H_2C\text{=CH-}R^2\text{-}(A\text{-}R^3)_z\text{-O-}CH_2\text{-CH=CH-}R^4$$

où $R^2$, $R^3$, $R^4$, A et z ont la signification donnée ci-dessus,
est additionné sur un composé organosilicique (2) avec au moins un atome d'hydrogène à liaison Si dans sa molécule, en présence d'un catalyseur (3) activant l'addition d'hydrogène à liaison Si sur une double liaison aliphatique,
où l'on obtient un composé organosilicique avec au moins un radical $Y^1$ à liaison Si, de formule

$$-(CH_2)_2\text{-}R^2\text{-}(A\text{-}R^3)_z\text{-O-}CH_2\text{-CH=CH-}R^4 \qquad (II)$$

où $R^2$, $R^3$, $R^4$, A et z ont la signification donnée ci-dessus.

**11.** Procédé suivant la revendication 1, caractérisé en ce que l'on utilise comme composé organosilicique (2) avec au moins un atome d'hydrogène à liaison Si dans sa molécule, les organopolysiloxanes (2b) de formule

$$H_cR_{3-c}SiO(SiR_2O)_o(SiRHO)_pSiR_{3-c}H_c$$

où

R peut être identique ou différent et représente un radical hydrocarbure monovalent, facultativement substitué, avec 1 à 18 atomes de carbone par radical,
c est 0 ou 1,
o est 0 ou un nombre entier de 1 à 1000, et
p est 0 ou un nombre entier de 1 à 500.

**12.** Procédé de préparation des composés organosiliciques contenant, par molécule, au moins un radical $Y^1$ à liaison Si, de formule

$$-(CH_2)_2-R^2-(A-R^3)_z-O-CH_2-CH=CH-R^4 \quad (II)$$

où

A représente -O-, -S- ou

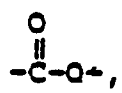

$R^2$ représente un radical alcoylène linéaire ou ramifié avec 1 à 7 atomes de carbone par radical ou un radical cycloalcoylène avec 5 à 7 atomes de carbone par radical,
$R^3$ représente un radical alcoylène linéaire ou ramifié avec 2 à 4 atomes de carbone par radical, qui peut être substitué par un groupe hydroxyle, un groupe méthoxy, un groupe éthoxy ou un groupe triméthylsiloxy,
$R^4$ représente un atome d'hydrogène ou un radical alcoyle avec 1 à 4 atomes de carbone par radical, et
z représente 0, 1 ou 2,
où un composé organique (1) de formule

$$H_2C=CH-R^2-(A-R^3)_z-O-CH_2-CH=CH-R^4$$

où
A représente -O-, -S- ou

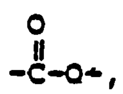

$R^2$ représente un radical alcoylène linéaire ou ramifié avec 1 à 7 atomes de carbone par radical ou un radical cycloalcoylène avec 5 à 7 atomes de carbone par radical,
$R^3$ représente un radical alcoylène linéaire ou ramifié avec 2 à 4 atomes de carbone par radical, qui peut être substitué par un groupe hydroxyle, un groupe méthoxy, un groupe éthoxy ou un groupe triméthylsiloxy,
$R^4$ représente un atome d'hydrogène ou un radical alcoyle avec 1 à 4 atomes de carbone par radical, et
z représente 0, 1 ou 2,
est additionné sur un silane (2a) avec un atome d'hydrogène à liaison Si, de formule

$$R_dHSiX_{3-d}$$

où

R peut être identique ou différent et représente un radical hydrocarbure monovalent, facultativement substitué, avec 1 à 18 atomes d'hydrocarbure par radical,

X peut être identique ou différent et est un atome d'halogène ou un radical de formule $-OR^1$, où

$R^1$ représente un radical hydrocarbure monovalent, facultativement interrompu par un atome d'oxygène d'éther, avec 1 à 8 atomes de carbone par radical, et

d est 0, 1 ou 2,

en présence d'un catalyseur (3) activant l'addition d'hydrogène à liaison Si sur une double liaison aliphatique, où l'on obtient un silane avec un radical $Y^1$ à liaison Si, de formule

$$-(CH_2)_2-R^2-(A-R^3)_z-O-CH_2-CH=CH-R^4 \qquad (II)$$

où $R^2$, $R^3$, $R^4$, A et z ont la signification donnée ci-dessus, à partir duquel, suite à une hydrolyse mixte au moyen de chloro- ou d'alcoxysilanes et/ou à une condensation avec des organopolysiloxanes capables de condensation, de manière connue en soi,

on obtient un organopolysiloxane avec au moins un radical $Y^1$ à liaison Si, de formule

$$-(CH_2)_2-R^2-(A-R^3)_z-O-CH_2-CH=CH-R^4 \qquad (II)$$

où $R^2$, $R^3$, $R^4$, A et z ont la signification donnée ci-dessus.